# EUROPÄISCHE PATENTSCHRIFT

(11) **EP 4 234 921 B1**
(45) Veröffentlichungstag und Bekanntmachung des Hinweises auf die Patenterteilung: **28.01.2026**
(21) Anmeldenummer: 22158572.2
(22) Anmeldetag: 24.02.2022
(51) Int. Cl.: F03D 7/02, F03D 80/40

(54) **VERFAHREN ZUM BETREIBEN EINER WINDENERGIEANLAGE UND WINDENERGIEANLAGE**
WIND TURBINE AND METHOD FOR OPERATING A WIND TURBINE
PROCÉDÉ DE FONCTIONNEMENT D'UNE ÉOLIENNE ET ÉOLIENNE

(43) Veröffentlichungstag der Anmeldung: 30.08.2023
(73) Patentinhaber: Wobben Properties GmbH, 26607 Aurich (DE)
(72) Erfinder: DE BOER, Wolfgang, Moormerland (DE)
(74) Vertreter: Eisenführ Speiser

(56) Entgegenhaltungen:
- EP-A1- 3 421 784
- US-A1- 2017 058 871

## Beschreibung

Die vorliegende Erfindung betrifft ein Verfahren zum Betreiben einer Windenergieanlage, besonders bei Eisansatz, und die vorliegende Erfindung betrifft eine Windenergieanlage, die ein solches Verfahren verwendet oder implementiert hat. Windenergieanlagen sind bekannt, sie erzeugen elektrische Leistung aus Wind. Dazu ist ein aerodynamischer Rotor mit mehreren Rotorblättern vorgesehen, der durch den Wind angetrieben wird. Dazu weisen die Rotorblätter ein aerodynamisches Profil auf. Windenergieanlagen werden dabei möglichst zu jeder Wettersituation betrieben, um möglichst viel Leistung und damit Energie aus Wind zu erzeugen.

Es können dabei Wettersituationen auftreten, in denen sich Eis bilden kann. Bildet sich Eis an den Rotorblättern, so kann dies den Betrieb der Windenergieanlage beeinflussen. Neben der Gefahr des Eiswurfs durch abfallendes Eis von den Rotorblättern und neben der Belastung besonders durch eine mögliche eisbedingte Unwucht, besteht auch das Problem, dass sich das aerodynamische Profil des Rotorblattes durch den Eisansatz verändert.

Um dem Problem zu begegnen, kommt in Betracht, dass ein solcher Eisansatz erkannt und dann besonders zum Schutz der Anlage und auch zum Schutz gegen Eiswurf die Windenergieanlage abgeschaltet wird.

Es ist aber häufig unerwünscht, die Windenergieanlage abzuschalten, weil dies mit Leistungseinbußen verbunden ist. Eine andere Möglichkeit, dem Problem zu begegnen, besteht somit darin, das Eis von den Rotorblättern durch eine entsprechende Blattheizung abzutauen. Eine solche Maßnahme benötigt allerdings selbst Energie, um diese Heizleistung erbringen zu können, was somit ebenfalls ungünstig sein kann. Dabei ist auch zu beachten, dass mancher Eisansatz, der auch schon Raureif beinhalten kann, keine so starke Einschränkung sein muss, dass Sicherheitsmaßnahmen oder das Abtauen eingeleitet werden müssen.

Gleichwohl kann aber eine Verschlechterung des Betriebs der Windenergieanlage zumindest durch die Verschlechterung des aerodynamischen Profils einschließlich Verschlechterung von Oberflächeneigenschaften des Rotorblatts, merklich und unerwünscht sein.

Das Dokument EP3421784A1 offenbart ein Verfahren zum Betreiben einer Windenergieanlage mit vereisten Rotorblättern.

Der vorliegenden Erfindung liegt somit die Aufgabe zugrunde, zumindest eins der genannten Probleme zu adressieren. Insbesondere soll eine Lösung geschaffen werden, den Betrieb der Windenergieanlage trotz Eisansatz zu verbessern. Zumindest soll zu bisher bekannten Lösungen eine alternative Lösung vorgeschlagen werden.

Erfindungsgemäß wird ein Verfahren gemäß Anspruch 1 vorgeschlagen. Ein solches Verfahren zum Betreiben der Windenergieanlage geht somit von einer Windenergieanlage aus, die einen aerodynamischen Rotor mit in ihrem Blattwinkel verstellbaren Rotorblättern aufweist. Sie wird durch eine Betriebssteuerung gesteuert, die beispielsweise eine Drehzahl der Windenergieanlage, insbesondere einen Zusammenhang zwischen Leistung und Drehzahl und auch einzustellende Blattwinkel vorgeben kann.

Außerdem ist die Windenergieanlage zum Erzeugen einer Anlagenleistung vorbereitet, wie allgemein bekannt ist, denn das ist der Hauptzweck der Windenergieanlage. Als Anlagenleistung kann eine Abgabenleistung betrachtet werden, die die Windenergieanlage in das elektrische Versorgungsnetz einspeist, es kann aber auch eine Generatorleistung mit Anlagenleistung bezeichnet werden. Eine Abgabeleistung unterscheidet sich von einer Generatorleistung insbesondere darin, dass ein Teil der Generatorleistung auch zum Betrieb von Einrichtungen der Windenergieanlage verwendet werden kann. Auch können Verlustleistungen auftreten, sodass die Generatorleistung häufig etwas größer als die Abgabeleistung ist.

Bei der vorliegenden Erfindung kommt es auf solche Details aber nicht an, sondern vielmehr darauf, dass eine Leistungsänderung berücksichtigt bzw. gesteuert werden kann. Ob die Generatorleistung oder in gleichem Maße die Abgabeleistung erhöht wird, macht für die vorliegende Erfindung keinen nennenswerten Unterschied. Daher bezieht sich die Beschreibung der Erfindung in allgemeiner Form auf eine Anlagenleistung.

Das Verfahren schlägt nun vor, dass bei Auftreten einer Eisansatzsituation eine Blattwinkelanpassungsroutine aktiviert wird. Eine Eisansatzsituation liegt vor, wenn Eisansatz an den Rotorblättern erkannt wurde, oder zu erwarten ist. Grundsätzlich wird die Blattwinkelanpassungsroutine aktiviert, wenn ein Eisansatz vorliegt. Es kommt aber auch in Betracht, dass ein Eisansatz nicht eindeutig identifiziert werden kann, weil keine Eissensoren verwendet werden. Ein Eisansatz kann nämlich auch aus dem Verhalten einer Windenergieanlage unter Berücksichtigung von Randbedingungen abgeleitet werden.

Beispielsweise kann ein Eisansatz reglungstechnisch beobachtet werden und wenn dabei rauskommt, dass ein Eisansatz vorliegt, wird von einer Eisansatzsituation ausgegangen, auch wenn keine absolute Sicherheit vorliegt. Insbesondere ist eine Voraussetzung für Eisansatz, dass eine Umgebungstemperatur der Windenergieanlage entsprechende Werte aufweist. Ein Eisansatz nicht zu erwarten, wenn die Umgebungstemperatur hoch ist, insbesondere wenn sie über +2° C liegt. Aber auch bei sehr niedrigen Umgebungstemperaturen tritt regelmäßig kein Eisansatz auf, und das kann auch berücksichtigt werden.

Liegt eine Eisansatzsituation vor, wird die Blattwinkelanpassungsroutine aktiviert und ein kollektiver Blattwinkel der Rotorblätter verändert, um die Rotorblätter zur Leistungserhöhung an eine bedingt durch den Eisansatz veränderte aerodynamische Situation anzupassen. Mit anderen Worten werden die Blattwinkel der Rotorblätter so verändert, dass sich das aerodynamische Verhalten der Rotorblätter verbessert.

Als kollektiver Blattwinkel wird ein Blattwinkel bezeichnet, der für alle Rotorblätter gleich ist. Es kommt grundsätzlich in Betracht, dass Rotorblätter in ihrem Blattwinkel individuell angesteuert werden, trotzdem aber ungefähr einen gemeinsamen Winkel aufweisen, der als kollektiver Blattwinkel bezeichnet wird. Die Rotorblätter können gegenüber diesem gemeinsamen Winkel individuell um wenige Grad verändert werden.

Es kommt aber auch in Betracht, dass die Windenergieanlage keine individuelle Blattverstellung vorsieht und alle Rotorblätter immer genau den gleichen Winkel aufweisen, weil sie nur synchron verstellt werden können. In diesem Fall ist der kollektive Blattwinkel damit der Blattwinkel aller Rotorblätter zugleich. Das kann natürlich auch dann der Fall sein, wenn eine Windenergieanlage zwar grundsätzlich das individuelle Ansteuern von Rotorblättern vorsieht, so genannte Einzelblattverstellung, diese individuelle Ansteuerung aber in einem Betriebszustand nicht aktiv ist. Auch dann haben alle Rotorblätter den gleichen Winkel, nämlich den kollektiven Blattwinkel. Nachfolgend kann der kollektive Blattwinkel auch vereinfachend nur als Blattwinkel bezeichnet werden, denn auf die individuellen Blattwinkel kommt es nicht an. Vereinfachend kann ganz generell zum Erläutern der vorliegenden Erfindung davon ausgegangen werden, dass die Rotorblätter synchron verstellt werden.

Jedenfalls wird vorgeschlagen, bei Auftreten einer Eisansatzsituation die Blattwinkelanpassungsroutine zu aktivieren und den Blattwinkel des Rotorblattes zu verstellen, um dadurch eine Leistungserhöhung zu erreichen. Es wurde nämlich erkannt, dass bei Eisansatz der ursprünglich vorgesehene Blattwinkel nicht der ideale sein muss. Grundsätzlich ist für die Rotorblätter einer Windenergieanlage, insbesondere in einem Teillastbetrieb, ein optimaler Blattwinkel vorgesehen. Dieser optimale Blattwinkel ist insbesondere auf eine bestimmte Schnelllaufzahl abgestimmt. Er ist also auf jeweils anzunehmende Windgeschwindigkeit und Drehzahl des Rotors abgestimmt. Dabei ist er auch auf ein konkretes Profil des Rotorblattes abgestimmt, das mit diesem vorbestimmten optimalen Blattwinkel optimal im Wind steht, wenn die zugrunde gelegte Schnelllaufzahl vorliegt.

Es wurde nun aber erkannt, dass diese vorbestimmte optimale Situation bei Eisansatz nicht mehr gelten muss. Liegt also Eisansatz vor, ist vereinfacht ausgedrückt mit einem anderen aerodynamischen Profil des Rotorblattes zu rechnen. Der Eisansatz bildet sich aber von Fall zu Fall sehr unterschiedlich aus. Das Eis kann ungleichmäßig über die Blattlänge verteilt werden. Das Eis kann ungleichmäßig zwischen Rotorblattnase und Rotorblatthinterkante verteilt sein. Das Eis kann auch unterschiedliche Eigenschaften ausbilden und entsprechend zu unterschiedlichen Rauigkeiten der dadurch neu entstandenen Oberfläche führen. Es wurde erkannt, dass all diese Einflussfaktoren, und es kommen auch noch weitere in Betracht, weder genau erkannt werden können, noch das dazu jeweils ideale Blattstellungen vorberechnet werden können.

Daher ist vorgesehen, bei Auftreten einer Eisansatzsituation die Blattwinkelanpassungsroutine zu aktivieren. Sie soll eine Veränderung des kollektiven Blattwinkels so vorsehen, dass eine Leistungserhöhung erreicht wird, falls es überhaupt möglich ist.

Somit wird vorgeschlagen, dass als veränderter kollektiver Blattwinkel ein aerodynamisch verbesserter Blattwinkel gewählt wird und dieser als Eisblattwinkel vorgegeben wird. Tritt also eine Eisansatzsituation auf, wird die Blattwinkelanpassungsroutine aktiviert und als Ergebnis ergibt sich schließlich ein Eisblattwinkel, der eine verbesserte aerodynamische Situation erreicht und dadurch zu einer Leistungserhöhung führt, sofern das möglich ist.

Schließlich kommt auch in Betracht, dass trotz Eisansatz der gewählte kollektive Blattwinkel bereits der Beste ist. Das kann dann mit der Blattwinkelanpassungsroutine erkannt werden.

Gemäß einem Aspekt wird vorgeschlagen, dass der Eisblattwinkel als minimaler Blattwinkel vorgegeben wird, der je nach weiteren Anforderungen eine Betriebssteuerung der Windenergieanlage überschritten, aber nicht unterschritten werden soll.

Durch das Vorgeben des Eisblattwinkels soll eine Verbesserung der aerodynamischen Situation erreicht werden. Dadurch kann ein als optimal vorausberechneter Blattwinkel, der aber nicht für ein vereistes Rotorblatt passt, zu Verbesserung der aerodynamischen Situation verändert werden. Es soll aber nicht das Einstellen des Rotorblattwinkels durch die Betriebssteuerung vollständig durch die Blattwinkelanpassungsroutine übernommen werden. Vielmehr soll die Betriebssteuerung in bekannter Art und Weise weiterarbeiten. Das bedeutet besonders, dass bei zunehmender Windgeschwindigkeit die Betriebssteuerung darauf mit der Erhöhung des Blattwinkels weiterhin in gewohnter Weise reagieren können muss.

Daher wird der Eisblattwinkel als minimaler Blattwinkel, also als Untergrenze vorgeschlagen. Die Betriebssteuerung kann dadurch normal weiterarbeiten und es erfolgt lediglich ein Anheben des Blattwinkels, falls sich das als ein aerodynamisch geeigneter Blattwinkel herausgestellt hat.

Gemäß der Erfindung wird vorgeschlagen, dass in der Blattwinkelanpassungsroutine der Eisblattwinkel durch einen Suchlauf gesucht wird, bei dem der kollektive Blattwinkel verändert und der resultierende Leistungsänderung überwacht bzw. ausgewertet wird.

Daher ist vorgesehen, dass der kollektive Blattwinkel ausgehend von einem Ausgangswinkel um einen Änderungswinkel verändert wird. Dazu wird eine Leistungsänderung als resultierende Änderung der Anlagenleistung erfasst, und es wird der Eisblattwinkel in Abhängigkeit von dem Änderungswinkel und der Leistungsänderung gewählt. Die Leistungsänderung ist also die Änderung der Anlagenleistung, die sich aufgrund der Änderung des kollektiven Blattwinkels um den Änderungswinkel ergibt. Der Anfangswinkel kann hierbei der aktuelle kollektive Blattwinkel sein, also der grade eingestellte Blattwinkel. Hiervon ausgehend wir der kollektive Blattwinkel verstellt und es ist zu erwarten, dass sich eine Leistungsänderung einstellt. Dieser Leistungsänderung kann die Änderung des kollektiven Blattwinkels zugeordnet werden, sie kann somit auch dem Änderungswinkel zugeordnet werden. Davon abhängig wird dann der Eisblattwinkel gewählt. Er hängt also vom Änderungswinkel und der resultierenden Leistungsänderung ab.

Erfindungsgemäß wird vorgeschlagen, dass der Eisblattwinkel als Summe aus dem Anfangswinkel und einem von der Leistungsänderung abhängigen Offset-Winkel berechnet wird. Der Anfangswinkel wird also um diesen Offset-Winkel erhöht, wobei der Offset-Winkel auch negativ sein kann. Dann würde der Anfangswinkel entsprechend verringert und das Ergebnis ist der Eisblattwinkel. Es wird besonders vorgeschlagen, dass der Offset-Winkel proportional zu einem Quotienten aus Leistungsänderung und Änderungswinkel ist. Je größer also die durch die Änderung des kollektiven Blattwinkels erzielte Leistungsänderung ist, umso größer wird auch der Offset-Winkel gewählt.

Eine doppelte Leistungsänderung, die auf einen doppelten Änderungswinkel zurückzuführen ist, wird natürlich nicht doppelt so hoch bewertet, sodass dieser Quotient aus Leistungsänderung und Änderungswinkel als Referenz vorgeschlagen wird. Insbesondere wird aber nicht der Offset-Winkel mit dem Änderungswinkel gleichgesetzt. Vielmehr wird eine inhaltliche Bewertung zur Berechnung des Offset-Winkels vorgeschlagen. Insoweit unterscheidet sich das vorgeschlagene Verfahren auch von einem klassischen hillclimbing-Verfahren, bei dem ein Wert solange verändert wird, bis seine Veränderung zu keiner Verbesserung mehr führt, und dadurch der maximale Wert gefunden wurde. Davon unterscheidet sich zumindest dieser Aspekt, der insbesondere eine Berechnung des Offset-Winkels vorschlägt, in dem nämlich die Proportionalität durch einen entsprechenden Faktor vorgegeben werden kann.

Das Verändern des Blattwinkels, Aufnehmen der Änderungsleistung und Berechnen des Offset-Winkels kann als Lernfahrt bezeichnet werden. Es wird hierdurch der Offset-Winkel und damit der Eisblattwinkel gelernt. Ein Suchlauf kann mehrere Lernfahrten beinhalten. Es kann aber auch der Suchlauf als Lernfahrt bezeichnet werden. Es wird hiermit ein schnelles Verfahren ermöglicht, bei dem mit einer oder wenigen Lernfahrten ein Ergebnis erzielt werden kann, sodass der eigentliche Anlagenbetrieb nur kurz durch Lernfahrten unterbrochen bzw. verändert wird.

Gemäß einem Aspekt wird vorgeschlagen, dass in dem Suchlauf der Blattwinkelanpassungsroutine zum Bestimmen des Eisblattwinkels der Offset-Winkel in Abhängigkeit von dem Änderungswinkel der Änderung des kollektiven Blattwinkels und der resultierenden Leistungsänderung gewählt wird. Das entspricht somit dem vorstehend erläuterten Verfahren.

Der Offset-Winkel wird dabei aus einem Produkt, aus einem Verstärkungsfaktor und der Leistungsänderung gebildet. Alternativ wird der Offset-Winkel aus dem Produkt aus dem Verstärkungsfaktor und einer relativen Leistungsänderung gebildet, wobei die relative Leistungsänderung als Quotient aus der Leistungsänderung und dem Änderungswinkel gebildet werden kann.

Wird der Offset-Winkel aus einem Verstärkungsfaktor und der Leistungsänderung gebildet, statt aus der relativen Leitungsänderung, so kann aber auch hierbei der Änderungswinkel zumindest indirekt einfließen. Es kommt beispielsweise in Betracht, dass grundsätzlich ähnliche oder gleiche Änderungswinkel verwendet werden und damit eine erfasste absolute Leistungsänderung quasi automatisch bzw. indirekt einem Änderungswinkel zugeordnet wird. Es kommt auch in Betracht, dass der Änderungswinkel in Abhängigkeit von anderen Randbedingungen gebildet wird, wie dem Anfangswinkel und/oder der vorherrschenden Windgeschwindigkeit. In diesem Fall können diese Randbedingungen indirekt in den Offset-Winkel einfließen.

Hängt also der Änderungswinkel beispielsweise vom Anfangswinkel ab, kann beispielsweise bei einem geringen Anfangswinkel ein höherer Änderungswinkel eingestellt werden. Dieser kann dann bei sonst gleichen Bedingungen zu einer höheren Leistungsänderung führen, was zu einem höheren Offset-Winkel führen kann. Damit führt bei sonst gleichen Randbedingungen ein geringerer Anfangswinkel zu einem höheren Offset-Winkel, weil er indirekt über den Änderungswinkel in die Leistungsänderung eingeht.

Es kommt aber auch in Betracht, dass der Anfangswinkel und/oder eine vorherrschende Windgeschwindigkeit direkt in dem Verstärkungsfaktor berücksichtigt werden.

Somit wird gemäß einem Aspekt vorgeschlagen, dass der Verstärkungsfaktor in Abhängigkeit von einer an der Windenergieanlage vorherrschenden Windgeschwindigkeit gewählt wird, insbesondere so, dass der Verstärkungsfaktor umso größer gewählt wird, je kleiner die Windgeschwindigkeit ist. Hier liegt die Erkenntnis zugrunde, dass bei geringen Windgeschwindigkeiten auch geringe Leistungen erzeugt werden und daher Veränderungen, insbesondere Veränderungen des Blattwinkels, auch nur zu geringen Veränderungen führen. Um hier somit stärker auf eine veränderte aerodynamische Situation bei Vereisung zu reagieren, wird daher ein größerer Verstärkungsfaktor bei geringen Windgeschwindigkeiten vorgeschlagen.

Es kann auch so erläutert werden, dass bei geringen Windgeschwindigkeiten eine Veränderung des Blattwinkels nur zu geringen Leistungsänderungen und damit nur zu einem geringen Offset-Winkel führen würde. Die Korrektur wäre also bei geringen Windgeschwindigkeiten auch gering. Um das zu kompensieren, wird ein höherer Verstärkungsfaktor bei geringen Windgeschwindigkeiten vorgeschlagen.

Gemäß einem Aspekt wird vorgeschlagen, dass in dem Suchlauf der Blattwinkelanpassungsroutine der kollektive Blattwinkel schrittweise ausgehend von dem Anfangswinkel um einen Änderungswinkel verändert wird, wobei der Änderungswinkel in Abhängigkeit von dem Anfangswinkel gewählt wird, insbesondere so, dass der Änderungswinkel dem Betrage nach umso größer gewählt wird, je kleiner der Anfangswinkel ist.

Auch hier liegt die Erkenntnis zugrunde, dass bei kleinen Blattwinkeln, die nämlich bei geringen Windgeschwindigkeiten eingestellt sind, eine größere Blattwinkelverstellung erforderlich sein kann, um eine spürbare Wirkung zu erzielen. Führt der Suchlauf dann zu einer Erhöhung des Eisblattwinkels, kann dieser im nachfolgenden Betrieb einen neuen, nun größeren, Anfangswinkel bilden. Wird nun ein weiterer Suchlauf ausgeführt, führt der größere Anfangswinkel zu einem kleineren Änderungswinkel. Somit verringert sich der Änderungswinkel mit weiteren Suchläufen. Es kann sich also ein iteratives Verhalten ergeben.

Hier ist auch zu beachten, dass die Veränderung des Blattwinkels in dem Suchlauf der Blattwinkelanpassungsroutine durchgeführt wird, um davon abhängig den Eisblattwinkel zu bestimmen. Dass der kollektive Blattwinkel in dem Suchlauf bei kleineren Anfangswinkeln größer gewählt wird, bedeutet somit nicht unbedingt, dass bei kleinen Anfangswinkeln auch der Offset-Winkel, der schließlich zum Eisblattwinkel führt, auch groß sein muss. Der Änderungswinkel ist nur die Grundlage der Lernfahrt. Der Offset-Winkel wird erst aus der erzielten Änderungsleistung berechnet. Durch einen angemessenen Änderungswinkel kann die Lernfahrt optimiert werden.

Gemäß einem Aspekt wird vorgeschlagen, dass in der Blattwinkelanpassungsroutine in dem Suchlauf bei gleichzeitiger Beobachtung der Abgabeleistung, ausgehend von einem Anfangswinkel, der kollektive Blattwinkel in einem Erhöhungsschritt erhöht und anschließend wieder auf den Anfangswinkel verringert wird. In einem Verringerungsschritt wird er verringert und anschließend wieder auf den Anfangswinkel erhöht. Es ist also in beiden Fällen vorgesehen, nach den Veränderungen zu dem Anfangswinkel wieder zurückzukehren. Bei dem Verringerungsschritt erfolgt dabei zuerst eine Erhöhung und dann die Rücckehr, also Verringerung, wohingegen im Verringerungsschritt zuerst verringert und dann zur Rückkehr erhöht wird.

Hier wurde besonders erkannt, dass sich ein systematischer Fehler einstellen kann, wenn immer nur eine dieser beiden Varianten angewendet werden würde. Daher werden beide Varianten vorgeschlagen.

Insbesondere wird vorgeschlagen, dass in einem Erhöhungssuchlauf erst der Erhöhungsschritt und dann der Verringerungsschritt vorgesehen sind, in einen Verringerungssuchlauf erst der Verringerungsschritt und anschließend der Erhöhungsschritt vorgesehen sind. Somit wird vorgeschlagen, zwischen der Reihenfolge zu differenzieren, ob zuerst der Erhöhungsschritt durchgeführt wird, oder ob zuerst der Verringerungsschritt durchgeführt wird. Auch hierdurch können systematische Fehler vermieden oder verringert werden.

Insbesondere ist vorgesehen, dass der Erhöhungssuchlauf und der Verringerungssuchlauf abwechselnd ausgeführt und/oder in vorbestimmten Wiederholungsintervallen wiederholt werden. Dadurch kann eine Gleichverteilung der Suchläufe erreicht werden, um auch dadurch systematische Fehler zu vermeiden.

Es kommt aber auch in Betracht, dass nur der Erhöhungsschritt durchgeführt wird, nämlich dann, wenn andere Mindestblattwinkel verhindern, dass der kollektive Blattwinkel von dem Anfangswinkel aus verringert wird. Beispielsweise kann ein Schalloptimierungsverfahren bereits einen minimalen Blattwinkel vorschreiben, der nicht unterschritten werden darf und in dem Fall wird dann weder ein Erhöhungssuchlauf noch ein Verringerungssuchlauf durchgeführt, sondern nur ein Erhöhungsschritt, bei dem also der Blattwinkel erhöht und dann zum Anfangswinkel wieder zurückgeführt wird.

Gemäß einem Aspekt wird vorgeschlagen, dass in dem Suchlauf der Blattwinkelanpassungsroutine eine Veränderung des kollektiven Blattwinkels in Abhängigkeit von vorgegeben Mindestblattwinkeln erfolgt. Hiermit werden also die Mindestblattwinkel, die oben schon erwähnt wurden, berücksichtigt.

Insbesondere ist vorgesehen, dass ein oder mehrere von der Betriebssteuerung vorgegebene Mindestblattwinkel erfasst werden, und ein Verringern des kollektiven Blattwinkels um den Änderungswinkel nur durchgeführt wird, wenn keiner der erfassten Mindestblattwinkel unterschritten wird, wobei ein bereits vorgegebener Eisblattwinkel nicht als erfasster Mindestwinkel berücksichtigt wird. Der Eisblattwinkel wird grundsätzlich auch als Mindestwinkel vorgegeben, findet hier aber keine Berücksichtigung, denn er soll in dem Suchlauf bzw. nach dem Suchlauf verändert werden und soll sich somit nicht selbst behindern.

Insbesondere ist vorgesehen, dass in dem Suchlauf dann jeweils nur ein Erhöhungsschritt durchgeführt wird, in dem der kollektive Blattwinkel ausgehend von dem Anfangswinkel erhöht und anschließend wieder auf den Anfangswinkel verringert wird. Dadurch kann trotz anderer vorhandener Mindestblattwinkel, insbesondere wenn diese ganz in der Nähe des Anfangswinkels liegen, ein Suchlauf durchgeführt werden.

Gemäß einem Aspekt wird vorgeschlagen, dass in der Blattwinkelanpassungsroutine der Suchlauf zum Finden des Eisblattwinkels in vorbestimmbaren Zeitintervallen wiederholt wird. Hier wurde besonders erkannt, dass ein verbesserter gefundener Blattwinkel nur solange Gültigkeit hat, wie die Windsituation ungefähr gleichgeblieben ist. Um sich ändernde Windbedingungen mit zu berücksichtigen wird somit ein ständiges Wiederholen des Suchlaufs vorgeschlagen, natürlich nur solange eine Eissituation vorliegt.

Die vorbestimmten Zeitintervalle liegen insbesondere im Bereich von 30 - 600 Sekunden, insbesondere im Bereich von 60 - 120 Sekunden. Diese Werte werden vorgeschlagen, da wenigstens 30 Sekundengewartet werden sollte, damit auch eine ausreichend lange Zeit verbleibt, in dem die Windenergieanlage stationär arbeitet, ohne dass ein Suchlauf durchgeführt wird.

Jedenfalls wurde erkannt, dass zumindest 5 Minuten ein so langer Bereich ist, in dem mit signifikanten Änderungen der Betriebsbedingungen, insbesondere mit signifikanten Änderungen der Windgeschwindigkeit zu rechnen ist. Daher sollte spätestens nach 5 Minuten der Suchlauf wiederholt werden.

Insbesondere wird vorgeschlagen, dass beim Wiederholen des Suchlaufs der zuvor bestimmte Eisblattwinkel als Anfangswinkel verwendet wird. Es wird also beim Wiederholen des Suchlaufs, der Eisblattwinkel, der beim vorherigen Suchlauf gefunden bzw. berechnet wurde, als neuer Anfangswinkel verwendet wird, von dem aus der Blattwinkel, also der kollektive Blattwinkel, verändert wird.

Hier liegt besonders der Gedanke zu Grunde, dass ein bestimmter bzw. berechneter Eisblattwinkel sofort als (neuer) Mindestblattwinkel implementiert wird. Die Anlagensteuerung verändert den aktuellen Arbeitspunkt dann so, dass der aktuelle Blattwinkel auf den neuen Mindestblattwinkel erhöht wird, wenn er zuvor darunter lag. Von hier aus wird dann der nächste Suchlauf gestartet, um den Mindestblattwinkel weiter zu verbessern. Vorzugsweise wird ein Suchlauf so lange wiederholt, bis sich keine Leistungsänderung mehr erzielen lässt. Dann ist ein optimaler Eisblattwinkel gefunden.

Insbesondere wird vorgeschlagen, dass ein Suchlauf wenigstens das Verändern des kollektiven Blattwinkels ausgehend von einem Anfangswinkel um einen Änderungswinkel und das Zurückändern des kollektiven Blattwinkels zurück zum Anfangswinkel umfasst. Insbesondere wird ein Suchlauf durch einen Erhöhungsschritt oder einen Verringerungsschritt gebildet, oder er wird durch einen Erhöhungssuchlauf oder einen Verringerungssuchlauf gebildet.

Gemäß einem Aspekt wird vorgeschlagen, dass nach jedem Suchlauf ein bzw. der Offset-Winkel berechnet wird und der bisherige Eisblattwinkel um den Offset-Winkel verändert wird, und der Offset-Winkel jeweils auf einen maximalen Offset-Winkel begrenzt wird, wobei der maximale Offset-Winkel insbesondere im Bereich von 0,5° bis 2° liegt, insbesondere im Bereich von 0,75° bis 1,5°, insbesondere etwa 1° beträgt. Der Eisblattwinkel wird also nach jedem Suchlauf dem Betrage maximal um den maximalen Offset-Winkel verändert. Dadurch wird erreicht, dass bei einer ungewöhnlich starken Leistungsänderung, die möglicherweise nicht vollständig auf die Veränderung des Blattwinkels zurückzuführen ist, keine zu starke Veränderung des Eisblattwinkels erfolgt. Etwaige fehlerhafte Veränderungen des Eisblattwinkels können durch wiederholte Suchläufe ausgeglichen werden. Fehler können sich dadurch herausmitteln.

Gemäß einem Aspekt wird vorgeschlagen, dass die Blattwinkelanpassungsroutine nur aktiviert wird, wenn ein Eisansatz erkannt wurde und/oder eine Umgebungstemperatur der Windenergieanlage in einem Bereich liegt, in dem Eisansatz auftreten kann, insbesondere im Bereich unter +2° C. Insbesondere wird vorgeschlagen, dass eine Erfassung der Umgebungstemperatur durchgeführt wird und die Blattwinkelanpassung in Abhängigkeit von der erfassten Umgebungstemperatur erfolgt. Außerdem oder alternativ wird vorgeschlagen, dass die Blattwinkelanpassungsroutine nur aktiviert wird, wenn ein Eisansatz durch Vergleich mit einer Anlagenkennlinie erkannt wird.

Hier wurde besonders erkannt, dass durch die Blattwinkelanpassungsroutine ein erheblicher Eingriff in die Betriebssteuerung vorgenommen wird und dass ein solcher Eingriff vermieden werden soll, wenn kein Eisansatz vorliegt. Daher wird die Aktivierung der Blattwinkelanpassungsroutine vorgeschlagen, wenn ein Eisansatz erkannt wurde, zum Beispiel durch einen entsprechenden Sensor, oder wenn zumindest keine Situation vorliegt, bei der ein Eisansatz ausgeschlossen ist. Das ist besonders der Fall, wenn die Umgebungstemperatur unter +2° C liegt. Liegt die Temperatur in diesem Bereich, muss zwar kein Eisansatz erfolgen, er ist aber vergleichsweise wahrscheinlich. Insbesondere ist aber außerhalb dieses Bereichs ein Eisansatz nicht zu erwarten. Das wird somit zur Aktivierung der Blattwinkelanpassungsroutine berücksichtigt.

Eine Möglichkeit, einen Eisansatz zu erkennen, ist durch Vergleich mit einer Anlagenkennlinie, was ohne zusätzliche Sensoren möglich ist und unten noch beschrieben wird. Das kann dadurch als einfache Voraussetzung zum Aktivieren der Blattwinkelanpassungsroutine implementiert werden. Eine Anlagenkennlinie kann auch synonym als charakteristische Kennlinie bezeichnet werden.

Gemäß einem Aspekt wird vorgeschlagen, dass die Blattwinkelanpassungsroutine und der Suchlauf, nur ausgeführt werden, wenn wenigstens eine der folgenden Bedingungen erfüllt ist. Insbesondere wird vorgeschlagen, dass mehrere Bedingungen oder insbesondere alle Bedingungen erfüllt sein müssen.

Als Bedingung 1 wird geprüft, ob seit dem letzten Suchlauf wenigstens eine Mindestwartedauer verstrichen ist. die insbesondere im Bereich von 30 Sekunden bis 5 Minuten liegt. Dadurch wird vermieden, dass der Suchlauf dem normalen Betrieb der Windenergieanlage dominiert oder zumindest zu sehr beeinträchtigt.

Als Bedingung 2 wird vorgeschlagen, dass überprüft wird, ob die Windenergieanlage sich in einem Automatikbetrieb befindet, in dem automatische Veränderungen eines Betriebspunktes ermöglicht werden. Hier wurde erkannt, dass die Blattwinkelanpassungsroutine eigenständig in den Betrieb der Windenergieanlage eingreift und dies sollte daher nur ermöglicht werden, wenn die Windenergieanlage im Automatikbetrieb automatisch betrieben wird und dadurch ein weiterer Eingriff integriert werden kann.

Als Bedingung 3 wird vorgeschlagen, dass auf ein Eisansatz durch Vergleich eines aktuellen Betriebspunktes mit einer Anlagenkennlinie erkannt wird, wenn dabei eine Mindestabweichung erreicht oder überschritten wird, oder dass der Eisblattwinkel übereinem anderen Mindestblattwinkel liegt. Durch Vergleich mit einer Anlagenkennlinie kann auf einfache Art und Weise, wie unten noch beschrieben wird, ein Eisansatz erkannt werden. Es wird vorgeschlagen, diese Prüfung ständig, zumindest vor einem Suchlauf, durchzuführen und den Suchlauf nur zu starten, wenn kein Eisansatz erkannt wurde. Hierdurch kann eine einfache Vorprüfung implementiert werden.

Stellt sich aber heraus, dass der Eisblattwinkel über einem anderem Mindestblattwinkel liegt, ist die Prüfung auf einen Eisansatz nicht sinnvoll. In diesem Fall wird nämlich vorgeschlagen, den Suchlauf dennoch durchzuführen, er führt nämlich dazu, dass die Abweichung von der Anlagenkennlinie klein gehalten wird.

Mit anderen Worten kann ein Suchlauf durch eine zu große Abweichung von der Anlagenkennlinie initiiert werden. Bei der ersten Initiierung ist der Eisblattwinkel als Anfangswert auf einen kleinen Wert gesetzt, bspw. -4°. Er liegt also nicht über einem anderen Mindestblattwinkel. Führt dieser Suchlauf nun zu einer Änderung des Mindestblattwinkels, und dann auch zu einer Änderung des eingestellten Blattwinkels, weil nämlich der Suchlauf erfolgreich war und den Wirkungsgrad erhöht hat, wird das auch zu einer geringeren Abweichung von der Anlagenkennlinie führen. Ist der Suchlauf sehr erfolgreich, ist die Abweichung so gering, dass sie unter der Mindestabweichung liegt.

In dem Fall soll aber die Blattwinkelanpassungsroutine nicht gestoppt werden, denn sie ist der Grund für die geringe Abweichung. Vielmehr soll in diesem Fall die Blattwinkelanpassungsroutine fortgesetzt werden, und ggf. mit weiteren Suchläufen der Eisblattwinkel noch weiter verbessert werden.

Als Bedingung 4 wird vorgeschlagen, dass eine vorherrschende Windgeschwindigkeit im Bereich der Windenergieanlage oberhalb einer vorgebbaren Mindestwindgeschwindigkeit liegt, insbesondere oberhalb von 2 m/s, insbesondere oberhalb von 2,5 m/s. Liegt die Windgeschwindigkeit darunter, ist ein Eisansatz ohnehin sehr unwahrscheinlich und/oder es ist nicht zu erwarten dass die aerodynamische Situation nennenswert verbessert werden kann, denn bei so geringen Windgeschwindigkeiten wird ohnehin kaum Leistung erzeugt.

Als Bedingung 5 wird vorgeschlagen, dass ein mittlerer kollektiver Blattwinkel unterhalb eines vorgebbaren Mindestblattwinkelgrenzwertes liegt, insbesondere unterhalb von 30°, insbesondere unterhalb von 20°. Hier wurde erkannt, dass bei so großen Blattwinkelabweichungen eine Verbesserung der aerodynamischen Situation kaum mehr erreicht werden kann. Das kann insbesondere daran liegen, dass die Windenergieanlage ohnehin in einem Betriebsmodus ist, bei dem sie gegenüber starken Windgeschwindigkeiten abgeregelt werden muss. Hier kann eine Leistungsregelung vorliegen, bei der die Anlage auf Nennleistung geregelt wird, sodass eine Leistungserhöhung durch einen angepassten Mindestblattwinkel nicht mehr möglich ist.

Als Bedingung 6 wird vorgeschlagen, dass ein Azimutsuchlauf zum Suchen einer optimalen Azimutausrichtung der Windenergieanlage seit einer vorgebbaren Inaktivitätszeit inaktiv ist, insbesondere seit wenigstens 10 Sekunden, insbesondere seit wenigstens 20 Sekunden. Ein solcher Azimutsuchlauf kann vorgesehen sein, um eine optimale Azimutausrichtung der Windenergieanlage zu finden. Ist dieser Azimutsuchlauf aktiv, verändert er auch die erzeugte Leistung und würde daher den Suchlauf für den Eisblattwinkel verfälschen. Daher soll ein Azimutsuchlauf zumindest 10 Sekunden, insbesondere wenigstens 20 Sekunden nicht aktiv sein.

Als Bedingung 7 wird vorgeschlagen, dass die aktuelle Abgabeleistung ein vorgebbares Schwankungsmaß der Leistung einhält, insbesondere dass die Abgabeleistung für wenigstens 60 Sekunden um nicht mehr als 15%, 10% oder insbesondre 5 %von einem gleitenden Mittelwert der Abgabeleistung von 1 Minute abweicht. Auch hier wurde erkannt. dass bei zu starken Schwankungen der Leistung, die meist durch entsprechende Schwankungen des Windes hervorgerufen werden, eine verlässliche Bewertung der Leistungsänderung in dem Suchlauf nicht mehr gewährleistet werden kann.

Gemäß Bedingung 8 wird vorgeschlagen, dass der aktuelle kollektive Blattwinkel ein vorgebbares Schwankungsmaß des Blattwinkels einhält, insbesondere, dass der kollektive Blattwinkel um nicht mehr als 0,5° von einem gleitenden Mittelwert des kollektiven Blattwinkels der letzten 30 Sekunden abweicht. Auch hier liegt die Erkenntnis zu Grunde, dass eine ständige Schwankung des Blattwinkels auf eine entsprechende unstete Situation hindeutet, insbesondere entsprechend schwankende Windgeschwindigkeiten. Eine verlässliche Bewertung der Leistungsänderung, insbesondere die Zuordnung zwischen Änderung des kollektiven Blattwinkels und der Leistungsänderung, ist dann nicht mehr möglich und der Suchlauf soll daher unterbleiben.

Es wird insbesondere vorgeschlagen, dass alle 8 Bedingungen zugleich zu erfüllen sind.

Gemäß einem Aspekt wird vorgeschlagen, dass auf einen Eisansatz durch Vergleich mit einer Anlagenkennlinie geprüft wird, bei dem ein Betriebspunkt, mit einer Anlagenkennlinie verglichen wird, wobei die Anlagenkennlinie einen Zusammenhang zwischen Anlagenleistung und Windgeschwindigkeit wiedergibt, und/oder einen Zusammenhang zwischen kollektivem Blattwinkel und Windgeschwindigkeit wiedergibt. Es wird von einem Eisansatz ausgegangen wird, wenn zu einer erfassten Windgeschwindigkeit eine Mindestabweichung von der Anlagenkennlinie aufgetreten ist. Hier kommen, je nach verwendeter bzw. relevanter Anlagenkennlinie zwei Abweichungen in Betracht.

Eine ist, dass ein aktueller Betriebspunkt eine Anlagenleistung aufweist, die wenigstens um einen Leistungstoleranzbetrag von der Anlagenleistung der Anlagenkennlinie der erfassten Windgeschwindigkeit abweicht. Hierbei ist somit der Leistungstoleranzbetrag die Mindestabweichung, auf die geprüft wird. Die andere Abweichung ist, dass der aktuelle Betriebspunkt einen kollektiven Blattwinkel aufweist, der wenigstens um einen Winkeltoleranzbetrag von dem kollektiven Blattwinkel der Anlagenkennlinie der erfassten Windgeschwindigkeit abweicht. Hierbei bildet der Winkeltoleranzbetrag die Mindestabweichung. Liegt eine der Abweichungen vor, wird von einem Eisansatz ausgegangen.

Hier liegt die Erkenntnis zugrunde, dass nur ein Eisansatz der Grund für eine solche Abweichung sein kann.

Gemäß einem Aspekt wird vorgeschlagen, erst von einem Eisansatz ausgegangen wird, wenn die Mindestabweichung von der Anlagenkennlinie wenigstens für eine vorbestimmt Mindestanzahl aufgetreten ist, wobei insbesondere vorgesehen ist, dass die Mindestanzahl im Bereich von 3 bis 10, liegt, insbesondere den Wert 5 aufweist.

Eine solche Anlagenkennlinie beschreibt also einen Zusammenhang zwischen Windgeschwindigkeit und zu erwartender Anlagenleistung oder einen Zusammenhang zwischen Windgeschwindigkeit und zu erwartendem Blattwinkel, wobei erstere für den Teillastbetrieb und letztere für den Volllastbetrieb vorgesehen ist.

Für eine vorbestimmte Windgeschwindigkeit wird also erwartet, dass die Windenergieanlage eine bestimmte Leistung erzeugt, was die erst genannte Anlagenkennlinie wiedergibt. Weicht die tatsächliche Leistung davon ab, nämlich um mehr als einen vorbestimmten Mindestwert, der die Mindestabweichung bildet, so kann dies auf einen Eisansatz hindeuten.

Umgekehrt wird davon ausgegangen, dass kein Eisansatz vorliegt, wenn eine solche Überschreitung nicht vorhanden ist.

Vorzugsweise wird vorgeschlagen, nicht nur zu prüfen, ob einmalig eine Mindestabweichung vorliegt bzw. erkannt wurde, denn eine einmalige Mindestabweichung kann andere Gründe haben, wie auch Messfehler. Daher wird vorgeschlagen, mehrere Mindestabweichungen abzuwarten, insbesondere 5. Liegt die Anzahl von Mindestabweichungen nicht vor, wird auch nicht von einem Eisansatz ausgegangen und daher auch kein Suchlauf gestartet.

Im Volllastbetrieb ist es so, dass ausreichend Leistung vorhanden ist, nämlich mehr Leistung als von der Windenergieanlage aufnehmbar in dem Wind vorhanden ist. Die Windenergieanlage wird dann durch Verstellen der Blattwinkel auf Nennleistung gehalten. Das führt dazu, dass bei bestimmten Windgeschwindigkeiten bestimmte Blattwinkel vorliegen. Dieser Zusammenhang ist ebenfalls vorbekannt und den gibt die zweitgenannte Anlagenkennlinie wieder. Liegen hier die Blattwinkel zu stark von den bei den jeweiligen Windgeschwindigkeiten angenommenen Blattwinkeln ab, liegt ebenfalls das Überschreiten eines vorbestimmten Mindestwertes vor. Es ist dann also eine Mindestabweichung aufgetreten. Auch dann wird von einem Eisansatz ausgegangen bzw. wenn diese Mindestabweichung nicht vorliegt, wird davon ausgegangen das kein Eisansatz vorliegt.

Erfindungsgemäß wird zudem eine Windenergieanlage gemäß Anspruch 12 vorgeschlagen, die einen aerodynamischen Rotor mit in ihrem Blattwinkel verstellbaren Rotorblättern aufweist, durch eine Betriebssteuerung gesteuert wird, zum Erzeugen einer Anlagenleistung vorbereitet ist und dazu vorbereitet ist, ein Verfahren gemäß einem der vorstehend erläuterten Aspekte auszuführen.

Durch eine solche Windenergieanlage sind somit auch die Vorteile erzielbar, die oben im Zusammenhang mit wenigstens einem Aspekt des erläuterten Verfahrens erzielt werden.

Die Erfindung wird nachfolgend beispielhaft unter Bezugnahme auf die begleitenden Figuren näher erläutert.
Figur 1 zeigt eine Windenergieanlage in einer perspektivischen Darstellung.
Figur 2 zeigt eine schematische Struktur eines vorgeschlagenen Verfahrens.
Figur 3 zeigt ein schematisches Ablaufdiagramm eines vorgeschlagenen Verfahrens.
Figur 4 zeigt ein Ablaufdiagramm eines Teils eines vorgeschlagenen Verfahrens.

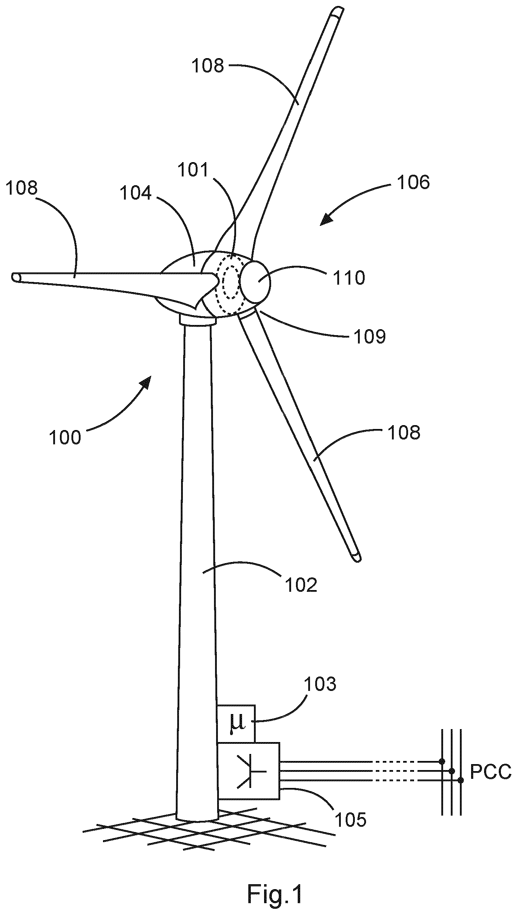

Fig. 1 zeigt eine schematische Darstellung einer Windenergieanlage gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage durch den Wind in eine Drehbewegung versetzt und dreht somit auch einen elektrodynamischen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Blattwinkel der Rotorblätter 108, die auch als Pitchwinkel bezeichnet werden, können durch Pitchmotoren an den Rotorblattwurzeln 109 der jeweiligen Rotorblätter 108 verändert werden.

Die Windenergieanlage 100 weist dabei einen elektrischen Generator 101 auf, der in der Gondel 104 angedeutet ist. Mittels des Generators 101 kann elektrische Leistung erzeugt werden. Zum Einspeisen elektrischer Leistung ist eine Einspeiseeinheit 105 vorgesehen, die besonders als Wechselrichter ausgebildet sein kann. Zum Steuern der Windenergieanlage 100 und auch der Einspeiseeinheit 105 ist eine Anlagensteuerung 103 vorgesehen.

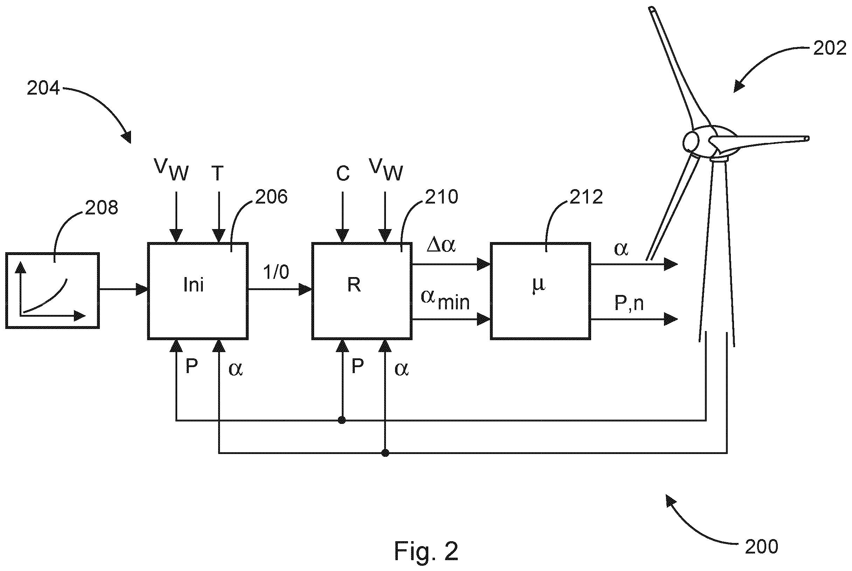

Figur 2 zeigt eine schematische Struktur 200 zum Erläutern eines Verfahrens gemäß einem Aspekt der Erfindung. Die Struktur 200 beinhaltet eine Windenergieanlage 202 und eine Steuerstruktur 204, die zum Ausführen einer Blattwinkelanpassungsroutine vorbereitet ist bzw. die Funktionsweise einer solchen Blattwinkelanpassungsroutine schematisch erläutert.

Eingangs ist ein Initialisierungsblock 206 vorgesehen, der zunächst prüft, ob eine Eisansatzsituation vorliegt. Nur wenn eine solche Eisansatzsituation vorliegt, werden die weiteren Schritte überhaupt ausgeführt. Um das zu prüfen verwendet der Initialisierungsblock 206 eine Anlagenkennlinie 208, die hier schematisch als Eingangsgröße angedeutet ist und somit in den Initialisierungsblock eingegeben wird. Sie kann aber auch bereits in dem Initialisierungsblock hinterlegt, insbesondere fest implementiert sein.

Die Anlagenkennlinie zeigt einen Zusammenhang zwischen Windgeschwindigkeit und Anlagenleistung und außerdem oder alternativ einen Zusammenhang zwischen Windgeschwindigkeit und einzustellendem Blattwinkel. Diese beiden Arten der Anlagenkennlinie sind für unterschiedliche Betriebszustände vorgesehen, nämlich die erste für einen Teillastbetrieb und die zweite für einen Volllastbetrieb. Entsprechend kann je nach Betriebssituation zwischen den beiden Anlagenkennlinien die zutreffende ausgewählt werden. Es kommt aber natürlich auch in Betracht, dass diese Zusammenhänge in einer Anlagenkennlinie hinterlegt sind, indem die Anlagenkennlinie in unterschiedliche Windgeschwindigkeitsbereiche aufgeteilt ist. Insbesondere wird hierzu davon ausgegangen, dass der Teillastbereich für Windgeschwindigkeiten für bis zu einer Nennwindgeschwindigkeit reicht und der Volllastbereich ab der Nennwindgeschwindigkeit vorgesehen ist.

Der Initialisierungsblock erhält außerdem die Windgeschwindigkeit v_{w}, die Umgebungstemperatur T, die aktuelle Anlagenleistung P und den aktuell eingestellten kollektiven Blattwinkel α als Eingangsgrößen.

Durch die Umgebungstemperatur kann besonders eine Vorprüfung vorgenommen werden. Ist die Umgebungstemperatur größer als 2° C, wird davon ausgegangen, dass keine Vereisung vorliegt. Lässt die Umgebungstemperatur aber die Annahme eines Eisansatzes zu, kann ein Vergleich mit der jeweiligen Anlagenkennlinie erfolgen. Dabei wird abhängig von der Windgeschwindigkeit die zugehörige Anlagenleistung aus der Anlagenkennlinie abgelesen und mit der aktuell vorhandenen Leistung verglichen. Stimmen diese nicht überein und weichen signifikant voneinander ab, wird von einem Eisansatz ausgegangen. Diese Prüfung erfolgt im Teillastbereich.

Im Volllastbereich wird sinngemäß in Abhängigkeit von der Windgeschwindigkeit der zugeordnete Blattwinkel aus der Anlagenkennlinie ausgelesen und mit dem erfassten Blattwinkel verglichen. Ergibt sich eine zu starke Abweichung, wird ebenfalls von einem Eisansatz ausgegangen.

Insbesondere wird davon ausgegangen, dass kein Eisansatz vorliegt, wenn bei diesem jeweiligen Vergleich nur sehr geringe Abweichungen festgestellt werden.

Abhängig davon, zu welchem Ergebnis der Initialisierungsblock 206 kommt, gibt er entweder eine 1 aus, die aussagt, dass eine Eisansatzsituation vorliegt, oder er gibt eine 0 aus, demnach keine Eisansatzsituation vorliegt.

Liegt eine Eisansatzsituation vor, erhält der Anpassungsroutineblock 210 als Eingangssignal den Wert 1 und wird entsprechend aktiv.

Dazu erhält der Anpassungsroutineblock 210 ebenfalls die aktuelle Anlagenleistung P und den aktuell eingestellten kollektiven Blattwinkel α. Ebenfalls erhält der Anpassungsroutineblock 210 diverse Randbedingungen als Eingang, die dort als Zustände C als Eingangsgröße angedeutet sind. Solche Randbedingungen können insbesondere Mindestblattwinkel sein, die durch andere Verfahren wie Geräuschminimierungsroutinen vorhanden sind. Als weitere Eingangsgröße erhält der Anpassungsroutineblock 210 die aktuelle Windgeschwindigkeit v_{w}.

Unter Berücksichtigung dieser Randbedingung wird dann in Abhängigkeit von dem aktuellen kollektiven Blattwinkel α ein Änderungswinkel Δα bestimmt. Um diesen Änderungswinkel Δα soll der aktuelle Anlagenbetrieb vorübergehend verändert werden und dann noch wieder zurück geändert werden. Der Änderungswinkel Δα kann von dem aktuellen Blattwinkel abhängig gewählt werden, besonders so, dass der Änderungswinkel bei kleinen aktuellen kollektiven Blattwinkeln groß gewählt wird, bei großen kollektiven Blattwinkeln klein gewählt wird.

Dieser Änderungswinkel Δα wird an die Betriebssteuerung 212 gegeben. Die Betriebssteuerung 212 steuert die Windenergieanlage und führt sehr viel mehr Operationen aus als in dieser Übersichtsdarstellung der Figur 2 gezeigt sind. Die Betriebssteuerung wird aber auch dazu verwendet, den Änderungswinkel Δα umzusetzen. Sie gibt dann entsprechend einen kollektiven Blattwinkel α an die Windenergieanlage, zum Beispiel an entsprechende Pitch-Verstelleinrichtungen, die hier im Detail nicht gezeigt sind. Die Betriebssteuerung kann beispielsweise auch Leistungssollwerte oder Drehzahlsollwerte ausgeben, die in dem Diagramm der Figur 2 exemplarisch als Ausgangsgrößen P, n der Betriebssteuerung 212 zusätzlich angegeben sind. Für die Blattwinkelanpassungsroutine werden diese Größen aber nicht benötigt. im Übrigen könnte auch die Betriebssteuerung 212 die Anlagenkennlinie 208 dem Initialisierungsblock 206 bereitstellen.

Somit wird ein Änderungswinkel vorgegeben und durch die Windenergieanlage 202 und die Betriebssteuerung 212 umgesetzt. Es stellt sich dann eine veränderte Leistung P ein, und die wird in dem Anpassungsroutineblock 210 erkannt und erfasst.

Als nächsten Schritt wird die Blattwinkeländerung wieder zurückgenommen, also der aufgeschaltete Änderungswinkel Δα nicht mehr aufgeschaltet. Entsprechend wird wieder der vorige kollektive Blattwinkel eingestellt und es wird wieder eine Zeit lang die resultierende Leistung aufgenommen und für spätere Auswertung verwendet.

Die Auswertung kann nun durchgeführt werden oder es kann eine weitere Änderung des Blattwinkels vorgesehen werden, indem nämlich diesmal der Änderungswinkel Δα von dem aktuellen kollektiven Blattwinkel abgezogen wird. Der kollektive Blattwinkel wird also verringert und dazu wieder die Leistung aufgenommen. Danach wird eine Zeit lang später, also nachdem eine stabile Betriebssituation beobachtet werden konnte, dieser abgezogene Änderungswinkel wieder aufgehoben, sodass die Anlage in ihrem Betrieb wieder auf den ursprünglichen kollektiven Blattwinkel zurückkehrt.

Während all dieser Schritte geht die normale Betriebssteuerung weiter und das kann dazu führen, dass Änderungen der Windgeschwindigkeit und/oder der Windrichtung oder andere Ereignisse, einen anderen Betriebspunkt hervorrufen. In dem Fall wird die Blattwinkeländerungsroutine ergebnislos abgebrochen und später ein neuer Versuch unternommen, wenn wieder eine stabile Situation vorliegt.

Die Auswertung erfolgt dann so, dass die jeweils erzielten Leistungsänderungen ausgewertet werden. Beispielsweise können sich 4 Leistungsänderungen ergeben, nämlich die erste Differenz nach Blattwinkelerhöhung, die zweite nach Rückkehr zum ursprünglichen Blattwinkel, die dritte nach Blattwinkelverringerung und die vierte nach Rückkehr der Blattwinkelverringerung zum ursprünglichen Winkel. Es kommt aber auch in Betracht, dass nur zwei Leistungsänderungen betrachtet werden, zum Beispiel die erste nach Blattwinkelerhöhung und dann die zweite nach Blattwinkelverringerung. Das kommt besonders dann in Betracht, wenn anderweitig vorgegebene Mindestblattwinkel eine Verringerung des aktuell eingestellten Blattwinkels nicht zulassen. Entsprechend wird ein solches Kriterium in dem Anpassungsroutineblock 210 überprüft.

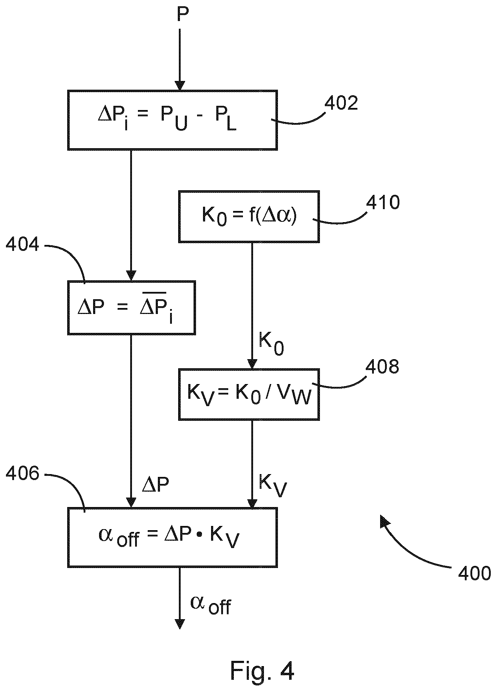

In Abhängigkeit von der so ermittelten Leistungsdifferenz kann ein Offset-Blattwinkel berechnet werden. Besonders dann, wenn sich hierbei eine Leistungserhöhung ergeben hat, kann diese mit einem Verstärkungsfaktor in einem Offset-Blattwinkel umgerechnet werden. Ein solcher Verstärkungsfaktor berücksichtigt dabei natürlich auch die abweichenden physikalischen Einheiten. Details werden dazu besonders in dem Ablaufdiagramm der Figur 4 erläutert.

Das Ergebnis ist dann ein Offset-Blattwinkel α_{off} der aber in Figur 2 nicht dargestellt ist, der auf den aktuellen kollektiven Blattwinkel oder einen anderen Blattwinkel aufaddiert werden kann, um den Eisblattwinkel zu erhalten. Der Eisblattwinkel wird als Mindestwinkel vorgegeben, den die Betriebssteuerung nicht unterschreiten soll. Entsprechend gibt dieser Anpassungsroutineblock 210 den Eisblattwinkel αₘᵢₙ aus, nämlich als Ergebnis der Blattwinkelanpassungsroutine.

Der Änderungswinkel Δα wird also nur temporär zum Durchführen der Routine erzeugt und an die Betriebssteuerung 212 zur temporären Umsetzung gegeben, wohingegen der Eisblattwinkel αₘᵢₙ das Ergebnis ist und zur dauerhaften Verwendung in der Betriebssteuerung 212 vorgesehen ist. Er kann solange verwendet werden bis ein neuer Eisblattwinkel αₘᵢₙ bestimmt wird, oder bis dieser aufgehoben wird, weil keine Eissituation mehr vorliegt.

Wird nach einem vorbestimmten Zeitintervall erneut ein Suchlauf durchgeführt, kann der zuvor bestimmte Eisblattwinkel αₘᵢₙ den Anfangswinkel bilden, von dem die Veränderungen des kollektiven Blattwinkels abgezogen werden. Dadurch kann der Eisblattwinkel αₘᵢₙ weiter verbessert werden.

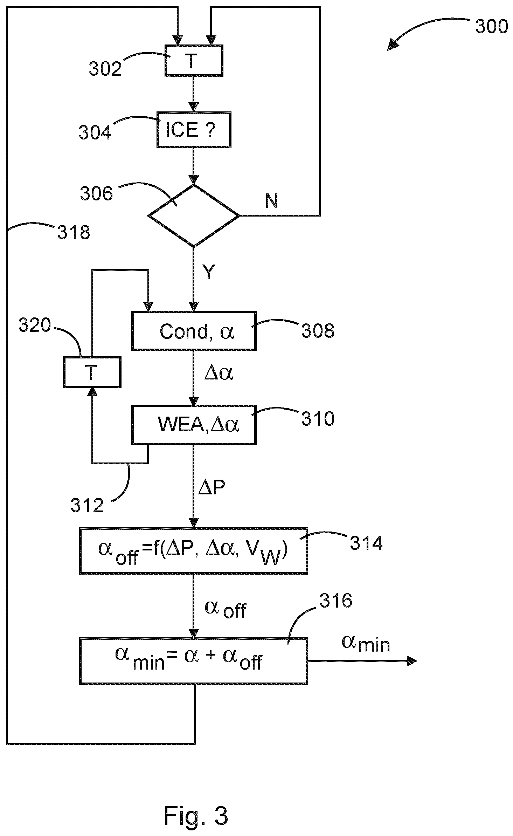

Figur 3 zeigt ein Ablaufdiagramm 300 für die Blattwinkelanpassungsroutine. Das Diagramm beginnt mit einem Warteblock 302, der verhindert, dass die Routine nicht kontinuierlich durchlaufen wird. Immerhin ist ein Eisansatz ein vergleichsweise langsam fortschreitender Prozess, was gewisse Wartezeiten sinnvoll macht.

Nach dem Warteblock 302 schließt sich der Eiserkennungsblock 304 an. In dem Eisansatzerkennungsblock wird überprüft, ob eine Eissituation vorliegt. Dies kann durch vergleichen einer Anlagenkennlinie erfolgen, wie es in Figur 2 besonders zum Initialisierungsblock 206 beschrieben wurde. Es kommt aber natürlich auch in Betracht, dass hier gezielte Eisansatzerkennungssensoren eingesetzt werden. Es wurde aber erkannt, dass die Blattwinkelanpassungsroutine besonders für solche Fälle vorgesehen ist, bei denen ein Eisansatz noch nicht sehr stark aufgetreten ist. Dann kommt auch in Betracht, dass er nicht in jedem Bereich des Rotorblattes vorherrscht, was wiederrum dazu führen kann, dass Eisansatzerkennungssensoren, die auf bestimmte Bereiche des Rotorblattes gerichtet sind, möglicherweise dort kein Eis erkennen, während an anderen Stellen Eis vorhanden ist.

Nach dem Eiserkennungsblock 304 ist der Abfrageblock 306, der dazu führt, dass in dem Fall, wenn keine Eisansatzsituation vorliegt, die Routine zurück zum Warteblock 302 geht und eine Zeit lang abwartet, bis die Routine erneu gestartet wird.

Wird aber eine Eisansatzsituation erkannt, geht das Verfahren über zum Konditionsblock 308, der Bedingungen aufnimmt, einschließlich dem aktuellen kollektiven Blattwinkel aufnimmt und davon abhängig einen Änderungswinkel Δα bestimmt. Dieser kann besonders in Abhängigkeit von dem aktuellen kollektiven Blattwinkel bestimmt werden, insbesondere so, dass er groß gewählt wird, wenn der aktuelle kollektive Blattwinkel klein ist. Ebenfalls wird berücksichtigt, dass anderweitig vorgegebene Mindestblattwinkel nicht unterschritten werden.

Der Änderungswinkel Δα wird dann an dem Umsetzungsblock 310 gegeben, in dem der Änderungswinkel in der Windenergieanlage ungesetzt wird. Der aktuelle kollektive Blattwinkel wird also um den Änderungswinkel Δα verändert. Das kann auch bedeuten, dass der aktuelle kollektive Blattwinkel verringert wird. Es gibt dann also einen veränderten Betrieb und dazu wird besonders auch die geänderte Anlagenleistung aufgezeichnet.

Dieser Vorgang, einen Änderungswinkel Δα vorzugeben und umzusetzen, gemäß dem Konditionsblock 208 und dem Umsetzungsblock 210, kann in einer inneren Schleife 312 wiederholt werden. Die Wiederholung sollte erst nach einer Widerholungszeit durchgeführt werden, was durch den zweiten Warteblock 320 erreicht bzw. veranschaulicht wird. Eine Wiederholungszeit kann im Bereich von 10 bis 60 Sekunden liegen.

Die Wiederholungszeit kann so gewählt sein, dass zumindest gewartet wird, dass die Windenergieanlage einen stabilen Leistungswert ausgibt. Mit anderen Worten sollte die Windenergieanlage zumindest jedes Mal in einem stationären Betrieb betrieben werden, um die Änderungsleistung aufzunehmen.

Insbesondere ist vorgesehen, dass zumindest ein geänderter Blattwinkel Δα wieder zurückgenommen wird und dann erneut die geänderte Leistung aufgenommen wird. Insbesondere wird die innere Schleife zweimal durchlaufen, oder viermal, auch die innere Schleife 312 achtmal zu durchlaufen ist eine Option. Das wird besonders vorgeschlagen um erst den Blattwinkel zu erhöhen und dann wieder zurückzustellen, ihn anschließend zu verringern und wieder zurückzustellen, was bereits vier Schleifendurchläufe sind.

Im Anschluss kann dies wiederholt werden, aber in umgekehrter Reihenfolge, indem erst der Blattwinkel verringert und zurückgestellt wird, dann erhöht und zurückgestellt wird. Jedes Mal, also bei jedem Durchlaufen der inneren Schleife wird auch an eine resultierende Leistung aufgenommen, die als einzelne Änderungsleistung aufgenommen werden kann.

Aus all den einzelnen Änderungsleistungen kann eine gesamte Änderungsleistung ΔP ermittelt und an den Offset-Berechnungsblock 314 übergeben werden. Die Änderungsleistung ΔP kann beispielsweise der Mittelwert dieser einzelnen Änderungsleistungen sein, wobei hierfür die einzelnen Änderungsleistungen entsprechend mit geeignetem Vorzeichen aufgenommen werden müssen. Besonders wird dazu vorgeschlagen, zur Berechnung der Leistungsänderung jeweils von der Leistung des höheren kollektiven Blattwinkels die Leistung des geringeren kollektiven Blattwinkels abzuziehen.

Wird also mit anderen Worten der Blattwinkel erhöht, berechnet sich die Leistungsänderung als Differenz zwischen der Leistung nach der Erhöhung und der Leistung vor der Erhöhung. Wird der Blattwinkel verringert, berechnet sich die Leistungsänderung als Differenz zwischen der Leistung vor der Verringerung und der Leistung nach der Verringerung. Somit ist die vorzeichenrichtige Leistungsänderung immer einer Blattwinkelerhöhung zugeordnet.

In dem Offset-Berechnungsblock 314 wird dann der Blattwinkel-Offset als Funktion von dieser Änderungsleistung, ggf. dem Änderungswinkel und der vorherrschenden Windgeschwindigkeit berechnet. Details dazu sind in Figur 4 erläutert.

Das Ergebnis ist somit dieser Offsetwinkel α_{off} und der wird an den Ausgabeblock 316 übergeben.

In dem Ausgabeblock 316 wird der Eisblattwinkel αₘᵢₙ berechnet, nämlich als Summe aus dem aktuellen kollektiven Blattwinkel α und dem zuvor berechneten Offset-Winkel α_{off}. Dieser Eisblattwinkel wird als αₘᵢₙ ausgegeben, er gibt also einen Mindestblattwinkel vor, den die Betriebssteuerung nicht unterschreiten soll. Sie kann ihn aber überschreiten, um in dem Bereich die Betriebssteuerung unverändert fortzuführen. Anschließend kehrt die Routine in der äußeren Schleife 318 zum Warteblock 302 zurück. Nach einer entsprechenden Wartezeit, die durch den Warteblock 302 vorgegeben wird, wird die Routine dann wiederholt.

Es kommt auch in Betracht, dass die Erkennung auf eine Eisansatzsituation gemäß dem Eiserkennungsblock 304 nicht jedes Mal wiederholt wird und stattdessen eine mittlere Schleife vorgesehen sein kann, die von dem Ausgabeblock 316 zum Konditionsblock 308 zurückkehrt. Für eine solche zurückkehrende Schleife kann aber ebenfalls ein weiterer Warteblock wie die Warteblöcke 302 und 320 vorgesehen sein, damit auch diese mittlere Schleife nicht sofort wiederholt wird.

Weitere Details zur Berechnung des Offset-Blattwinkels sind in dem Ablaufdiagramm 400 der Figur 4 erläutert. Im Grunde gibt das Ablaufdiagramm 400 der Figur 4 eine mögliche Berechnung im Offset-Berechnungsblock 314 der Figur 3 wieder, mit Berücksichtigung der Änderungen gemäß der inneren Schleife 312 der Figur 3.

Das Ablaufschema 400 der Figur 4 geht somit davon aus, dass Anlagenleistungen aufgenommen werden, nämlich sowohl vor, als auch nach Durchführung von Blattwinkeländerungen. Entsprechend ist veranschaulichend ein Änderungsleistungsblock 402 vorgesehen, der solche erfassten Anlagenleistungen P als Eingangswerte erhält. In dem Änderungsleistungsblock 402 werden einzelne Änderungsleistungen ΔPi berechnet. Sie berechnen sich jeweils aus einer Differenz zwischen der oberen Leistung P_{U} und der unteren Leistung P_{L}. Die untere Leistung ist dabei die Anlagenleistung, die bei einer Blattwinkelveränderung dem kleineren Blattwinkel zugeordnet ist. Wird also der Blattwinkel erhöht, ist die untere Leistung die Anfangsleistung bevor die Erhöhung durchgeführt wird. Wird die Leistung verringert, ist die untere Leistung die Anlagenleistung nach der Verringerung. Entsprechend ist die obere Leistung P_{U} die Anlagenleistung, die jeweils dem größeren Blattwinkel zugeordnet ist, also die Anlagenleistung nach der Erhöhung oder vor der Verringerung.

Vorzugsweise wird wenigstens eine Erhöhung mit einer Verringerung zurück auf den Anfangsblattwinkel durchgeführt, sodass sich dadurch wenigstens zwei einzelne Änderungsleistungen ΔPi ergeben. Je nachdem wie viele Blattwinkelerhöhungen und -verringerungen durchgeführt werden, ergeben sich entsprechend viele einzelne Änderungsleistungen ΔPi.

Aus diesen kann in dem Mittelwertblock 404 ein entsprechender Mittelwert berechnet werden, der die Änderungsleistung ΔP ergibt. Diese Änderungsleistung ΔP wurde dem Berechnungsblock 406 zugeführt, um davon abhängig den Offset-Winkel α_{off} zu berechnen.

Der Offset-Winkel α_{off} wird gemäß dem Berechnungsblock 406 aus der Änderungsleistung ΔP multipliziert mit einem Verstärkungsfaktor kᵥ berechnet. Der Verstärkungsfaktor kᵥ wird vorzugsweise aber situationsabhängig gewählt. Insbesondere wird vorgeschlagen, dass der Verstärkungsfaktor kᵥ entgegen proportional zur Windgeschwindigkeit v_{w} ist. Das wird im Verstärkungsberechnungsblock 408 veranschaulicht.

Der Verstärkungsberechnungsblock 408 geht von einem Grundfaktor k₀ aus, der durch die aktuelle Windgeschwindigkeit v_{w} geteilt wird. Dadurch entsteht die umgekehrte Proportionalität. Insbesondere ist vorgesehen, dass der Verstärkungsfaktor umso größer gewählt wird, je kleiner die Windgeschwindigkeit ist. Es kommt aber auch in Betracht, dass das nicht unbedingt durch eine umgekehrte Proportionalität rechnerisch umgesetzt wird, sondern es kommen auch andere Abhängigkeiten in Betracht, bei denen der Verstärkungsfaktor kᵥ mit zunehmender Windgeschwindigkeit sinkt bzw. umgekehrt, hierfür können bspw. auch abschnittsweise Werte oder Faktoren vorgegeben werden.

Der Grundfaktor k₀ wird gemäß dem Verstärkungsvorgabeblock 410 bestimmt. Der Verstärkungsfaktor führt dazu, dass die Änderungsleistung ΔP in einen Offset-Winkel α_{off} umgerechnet wird. Vorteilhafterweise wird hierfür auch die Winkeländerung, also der Änderungswinkel Δα, zugrunde gelegt, zumindest sollte sie einfließen, da sie zu der Änderungsleistung ΔP geführt hat. Das kann durch den Verstärkungsfaktor kᵥ, nämlich den Grundfaktor k₀ erreicht werden. Dieser wird gemäß dem Verstärkungsvorgabeblock 410 in Abhängigkeit von dem Änderungswinkel vorgegeben. Hierbei ist zu berücksichtigen, dass vorzugsweise ein solcher Änderungswinkel Δα nicht ständig geändert wird. Insbesondere ist vorgesehen, dass dieser dem Betrage nach besonders für mehrere Durchläufe der inneren Schleife 312 der Figur 3 konstant bleibt. Wird die äußere Schleife 318 und damit die Blattwinkelanpassungsroutine erneut durchlaufen, kann auch ein neuer Änderungswinkel Δα bestimmt werden.

Somit kommt insbesondere in Betracht, dass für alle einzelnen Änderungsleistungen ΔPi, von denen in dem Mittelwertblock 408 der Mittelwert gebildet wird, dem Betrage nach derselbe Änderungswinkel Δα zugrunde liegt.

Dazu wird vorgeschlagen, den Grundfaktor k₀ in Abhängigkeit von diesem Änderungswinkel Δα vorzugeben. Eine solche Vorgabe kann auch empirisch und für unterschiedliche Werte des Änderungswinkels Δα individuell vorgegeben werden. Es kommt aber auch in Betracht, dass der Grundfaktor k₀ proportional zum Änderungswinkel Δα ist.

Somit ist dann im Ergebnis der Verstärkungsfaktor kᵥ von dem Änderungswinkel Δα und der Windgeschwindigkeit v_{w} abhängig und dies kann somit in den Berechnungen des Offset-Winkels α_{off} einfließen. Somit gibt der Berechnungsblock 406 letztlich den Offsetwinkel α_{off} aus und aus dem kann der Eisblattwinkel αₘᵢₙ bestimmt werden, wie dies in dem Ausgabeblock 316 der Figur 3 beispielsweise erläutert ist.

Es kommt aber auch in Betracht, dass in einer anderen Alternative der Grundfaktor k₀ nicht von dem Änderungswinkel Δα abhängt. Der Änderungswinkel Δα könnte stattdessen über die Änderungsleistung berücksichtigt werden, indem statt der Änderungsleistung ΔP eine relative Änderungsleistung berücksichtigt werden könnte, nämlich eine Änderungsleistung die in Bezug zum Änderungswinkel gesetzt wird. Das würde in der in dem Berechnungsblock 406 gezeigten Formeln natürlich zu einer Änderung der Einheit führen und das kann durch den Verstärkungsfaktor kv berücksichtigt werden.

Erfindungsgemäß sind besonders die folgenden Aspekte erkannt worden bzw. werden vorgeschlagen.

Es wurde erkannt, dass bereits verhältnismäßig kleine Mengen Eis an der Vorderkante, der Hinterkante oder auch auf den Oberflächen der Blätter zu einem erheblichen Leistungsabfall führen können. Das wiederum führt dazu, dass bereits mit Raureif besetzte Blätter, bei z. Bsp. 12m/s, wo eigentlich Nennleistung erzeugt wird, nur noch wenige 100kW Leistung liefern und die Anlagen dann, selbst bei der größtmöglichen Unempfindlichkeit der Eisansatzerkennung, die einen Vergleich mit einer Anlagenkennlinie verwendet, wegen Eisansatz gestoppt werden.

Versuche haben gezeigt, dass eine Vergrößerung des minimalen Blattwinkels diesen Effekt deutlich abschwächen kann. Welcher minimale Blattwinkel eingestellt werden muss, um die höchstmögliche Leistung zu erzielen, hängt jedoch von vielen Faktoren, wie dem Rotorblatt selber, der aktuellen Betriebskennlinie, der Art des Eises, der Menge des Eises, der Verteilung des Eises auf der Rotorblattoberfläche, der Windgeschwindigkeit, der Luftdichte usw. ab. Außerdem führt jede Vergrößerung des minimalen Blattwinkels, z. Bsp. durch eine manuelle Einstellung, im eisfreien Zustand zu einem Leistungsverlust und ist somit zu vermeiden.

Um eine Lösung für dieses Problem zu schaffen und jederzeit unter Vereisungsbedingungen die maximal mögliche Leistung zu erzeugen, wurde das erfindungsgemäße Verfahren erdacht. Dabei handelt es sich um einen automatisch arbeitenden Suchalgorithmus (Tracker), der den minimalen Blattwinkel unter Vereisungsbedingungen so einregelt, dass die Anlage den größtmöglichen Wirkungsgrad (Maximum-Power-Point) hat. Das Verfahren kann auch als Eis-MPP-Tracker bezeichnet werden.

Dazu verändert der Eis-MPP-Tracker, wenn die nötigen Randbedingungen erfüllt sind in bestimmten Abständen den minimalen Blattwinkel der Windenergieanlage (kurz Anlage) und prüft, ob diese Änderung zu einem Anstieg oder einem Abfall der Leistung führt. Je nachdem, was das Ergebnis dieser Blattwinkeländerung ist, wird der durch den Eis-MPP-Tracker bis dahin erlernte minimale Blattwinkel vergrößert oder wieder reduziert. Auf diese Weise stellt sich nach typisch 30 Minuten ein minimaler Blattwinkel ein, bei dem die Anlage, unter den jeweiligen Umständen, die maximal mögliche Leistung erzeugt.

Solange der Eis-MPP-Tracker ausgeschaltet oder die Eisansatzerkennung auf Grund entsprechend hoher Außentemperatur inaktiv ist, wird an die Betriebssteuerung ein minimaler Blattwinkel von bspw. -4° übertragen. Dieser negative Winkel hat somit zunächst keinen Einfluss auf das Verhalten der Anlage.

Die Blattwinkelanpassungsroutine, die auch als State-Machine bezeichnet werden kann, führt jetzt jeweils in mehreren Schritten (States) die Änderung des Blattwinkels oder minimalen Blattwinkels und im Anschluss eine Bewertung der damit verbundenen Leistungsänderung durch. Es gibt zahlreiche Voraussetzung, die möglichst erfüllt sein müssen, damit eine Lernfahrt durchgeführt wird:
Seit der letzten Lernfahrt müssen mindestens 2 min. vergangen sein.

Die Anlage befindet sich im Automatikbetrieb.

Der Zähler für ein enges Toleranzband einer Eiserkennung zur Steuerung einer Blattheizung muss mindestens 5 erreicht haben, eine Mindestabweichung von der Anlagenkennlinie muss also wenigstens 5 Mal erreicht worden sein, wodurch eine Blattheizung ausgelöst werden könnte. Das betrifft eine oben beschriebene Prüfung auf einen Eisansatz durch Vergleich mit einer Anlagenkennlinie.

Oder der minimale Blattwinkel des Eis-MPP-Trackers ist noch größer als der aktuelle minimale Blattwinkel in Abh. vom Betriebs-Mode der Anlage. Letzteres, damit der MPP-Tracker weiterarbeitet, wenn die Leistung durch den MPP-Tracker ansteigt und damit wieder innerhalb des engen Toleranzbandes der Eisansatzerkennung liegt.

Die mittlere Windgeschwindigkeit muss mindestens 2,5m/s betragen.

Der mittlere Blattwinkel muss kleiner 20° sein.

Der Azimut-MPP-Tracker war in den letzten 20s nicht aktiv.

Die aktuelle Leistung darf für min. 60s nicht mehr als ±10% vom gleitenden Mittelwert der Leistung über eine Minute abweichen.

Der aktuelle Blattwinkel darf nicht mehr als 0,5° vom gleitenden Mittelwert des Blattwinkels der letzten 30s abweichen.

Wenn diese Bedingungen alle erfüllt sind, startet eine Lernfahrt. Dabei wird zunächst die mittlere Leistung der letzten 5s berechnet und für den späteren Vergleich gespeichert. Da der Einfluss einer Blattwinkeländerung auf die Leistungsänderung bei kleinen Blattwinkeln geringer ist als bei bereits um einige Grad zurückgefahrene Blätter, wird in Abhängigkeit des mittleren Blattwinkels der letzten 30s die erforderliche Winkeländerung bestimmt. So wird z. Bsp. bei einem aktuellen mittleren Blattwinkel von 0° eine Winkeländerung von bspw. 3° vorgegeben, während dieser Wert bei einem aktuellen Blattwinkel von 8° dann nur noch 1,5° beträgt.

Ein I/O-Board 1 in einem Steuerschrank bestimmt anhand von unterschiedlichen minimalen Blattwinkeln für verschiedene Funktionen wie z. Bsp. α-min(Schalloptimierung), α-min(Vorhalteleistung) oder α-min(sektoriell), den größten minimalen Blattwinkel, aber ohne den minimalen Blattwinkel des Eis-MPP-Trackers zu berücksichtigen und überträgt diesen Wert an ein I/O-Board 2, das in der Gondel angeordnet sein kann. Wenn der Abstand des aktuellen mittleren Blattwinkels zu diesem minimalen Blattwinkel kleiner ist als die zuvor bestimmte Winkeländerung, erfolgt die Verstellung der Blätter für die Lernfahrt zu größeren Winkeln nach hinten, da sonst die geforderte Winkeländerung nicht erreicht werden kann. Wenn sich bereits durch den Eis-MPP-Tracker ein mittlerer Blattwinkel eingestellt hat, der es zulässt, dass die Winkeländerung auch zu kleineren Blattwinkeln erfolgen kann, werden die Blätter abwechselnd, bei einer Lernfahrt zuerst vor und dann wieder zurück und bei der nächsten Lernfahrt zuerst zurück- und danach wieder vorgefahren. Auf diese Weise wird erreicht, dass Einflüsse, die durch ein monotones Zurück- und anschließendes Wiedervorfahren der Blätter, zu einer Verfälschung des Ergebnisses führen, ausgeschlossen.

Je nachdem, ob die Blätter für die Lernfahrt vor- oder zurückgefahren sollen, überträgt das I/O-Board 2 in der Gondel jetzt einen Soll-Blattwinkel, der sich aus dem mittleren Blattwinkel der letzten 30s und der zuvor bestimmten Winkeländerung für die Lernfahrt zusammensetzt, an das I/O-Board 1 im Steuerschrank und wartet einige Sekunden, bis dieser SollWinkel erreicht wurde. Nach Ablauf dieser Zeit wartet der MPP-Tracker jetzt typisch 30s auf die, aus der Winkeländerung resultierende Leistungsänderung und überwacht während dieser Zeit, ob sich der aktuelle Blattwinkel in einem Bereich von ±0,5° zum vorgegeben Sollwert befindet. Liegt der Blattwinkel außerhalb dieses Bereichs, weil z.B. der Wind zugenommen hat und die Drehzahl geregelt werden muss, wird die Lernfahrt ohne Ergebnis abgebrochen. Entspricht der Blattwinkel für die gesamte Dauer dem Sollwert, erfolgt nach Ablauf der Zeit eine Berechnung der relativen Leistungsänderung, bei der die vor der Lernfahrt gespeicherte mittlere Leistung der letzten 5s in Relation zur aktuellen, mittleren Leistung der letzten 5s gesetzt wird. Das Ergebnis der aktuellen, mittleren Leistung und der relativen Leistungsänderung wird zwischengespeichert.

Im nächsten Schritt erfolgt eine Verstellung der Blätter zurück zum ursprünglichen Blattwinkel vor der Lernfahrt. Dazu wird die zu Beginn der Lernfahrt zum aktuellen Mittelwert des Blattwinkels addierte Winkeländerung wieder, mit entsprechendem Vorzeichen, vom Soll-Blattwinkel subtrahiert. Nach einigen Sekunden Wartezeit wird erneut überwacht, ob sich der ursprüngliche Blattwinkel wieder eingestellt hat. Weicht, wie beim ersten Teil der Lernfahrt, der Blattwinkel um mehr als 0,5° vom Sollwert ab, wird auch hier die Lernfahrt ohne Ergebnis beendet. Liegt der Blattwinkel im vorgegebenen Bereich, erfolgt nach Ablauf von weiteren 30s Wartezeit eine erneute Auswertung der Leistungsänderung, indem die zuvor gespeicherte mittlere Leistung, bei verändertem Blattwinkel, in Relation zur aktuellen mittleren Leistung der letzten 5s, beim ursprünglichen Blattwinkel, gesetzt wird.

Abschließend werden beide relative Leistungsänderungen mit einem Verstärkungsfaktor beaufschlagt und damit direkt in eine Blattwinkeländerung mit einer Auflösung von 0,01° umgerechnet. Der Verstärkungsfaktor hängt dabei von der Windgeschwindigkeit ab. Je niedriger die Windgeschwindigkeit, umso höher ist die Verstärkung. Dadurch wird erreicht, dass die, im Verhältnis kleineren, Leistungsänderungen bei niedrigen Windgeschwindigkeiten kompensiert werden.

Die berechneten Winkeländerungen werden jetzt, mit entsprechendem Vorzeichen und in Abhängigkeit davon, ob die Blätter zuerst zurück und dann vorgefahren wurden, oder umgekehrt, auf den aktuellen minimalen Blattwinkel des Eis-MPP-Trackers addiert. Führt z. Bsp. das Zurückfahren der Blätter um 3° zu einem Leistungsanstieg von 10%, was unter Vereisungsbedingungen durchaus realistisch ist, resultiert daraus, für diesen Teil der Lernfahrt, bspw. eine Erhöhung des α-min(Eis-MPPT) um 0,3°. Führt das anschließende Vorfahren der Blätter jetzt zu einem Leistungsabfall um 10%, bewirkt das ebenfalls eine Erhöhung des α-min(Eis-MPPT) um 0,3°. Wenn die Leistung beim Zurückfahren sinkt und beim Vorfahren steigt, wird in beiden Fällen α-min(Eis-MPPT) um 0,x° gesenkt, weil offenbar kleinere Blattwinkel zu einer höheren Leistung führen. Auf diese Weise regelt der Eis-MPP-Tracker den minimalen Blattwinkel immer auf einen Wert, bei dem die Anlage die höchstmögliche Leistung erzeugt. Durch Änderungen der Windgeschwindigkeit während der Lernfahrt, kann es vorkommen, dass das Ergebnis der Messung verfälscht wird. Dadurch, dass aber in relativ kleinen Abständen Lernfahrten durchgeführt werden, die immer nur zu relativ kleinen Winkeländerungen führen, mitteln sich die Einflüsse der Windgeschwindigkeitsänderungen raus. Für den Fall einer ungewöhnlich starken Leistungsänderung, wird die daraus resultierende Änderung des minimalen Blattwinkels auf 0,5° für jeden Teil der Lernfahrt begrenzt, sodass bei einer Lernfahrt eine Änderung des minimalen Blattwinkels von maximal 1,0° erfolgt.

Am Ende der Lernfahrt wird der minimale Blattwinkel des Eis-MPP-Trackers auf maximal 18° begrenzt. Zu kleinen Blattwinkeln erfolgt eine Begrenzung auf den minimalen Blattwinkel in Abhängigkeit vom aktuellen Betriebsmode minus 0,5°. Somit kann der minimale Blattwinkel des Eis-MPP-Trackers gegenüber dem typischen minimalen Blattwinkel etwas negativ werden. Durch diese negative Vorspannung wird gewährleistet, dass bei einem, in eisfreien Zustand aktivierten Eis-MPP-Tracker (optional möglich), durch windgeschwindigkeitsabhängige Leistungsschwankungen hervorgerufene Änderungen des minimalen Blattwinkels, zu einer, wenn auch sehr geringen, Beeinflussung der Leistung führen.

Bei dem Eis-MPP-Tracker geht es nicht darum, einen minimalen Blattwinkel mit einer Genauigkeit von 0,1° zu ermitteln. Es geht vielmehr darum, den Blattwinkel von typisch 0° Richtung 8° bis 11° zu verändern, da hier, nach ersten Erfahrungen, unter Vereisungsbedingungen die höchste Leistung zu erwarten ist. Um zu vermeiden, dass die Anlagen wegen Eisansatz stoppen, bevor der Eis- MPP-Tracker den optimalen Betriebspunkt gefunden hat, arbeitet der Eis-MPP-Tracker in relativ kurzen Intervallen und mit relativ großen Verstärkungen, sodass im Abstand von einigen Minuten Blattwinkeländerungen von mehreren Grad erfolgen können. Das geht dann u. U. etwas zu Lasten der Genauigkeit, sichert aber in vielen Fällen den Weiterbetrieb der Anlage.

## Patentansprüche

1. Verfahren zum Betreiben einer Windenergieanlage, wobei
- die Windenergieanlage
- einen aerodynamischen Rotor mit in ihrem Blattwinkel verstellbaren Rotorblättern, aufweist,
- durch eine Betriebssteuerung gesteuert wird und
- zum Erzeugen einer Anlagenleistung vorbereitet ist, wobei
- bei Auftreten einer Eisansatzsituation, wenn Eisansatz an den Rotorblättern erkannt wurde, oder zu erwarten ist, eine Blattwinkelanpassungsroutine aktiviert wird, wobei
- mit der Blattwinkelanpassungsroutine ein kollektiver Blattwinkel der Rotorblätter verändert wird, um die Rotorblätter zur Leistungserhöhung an eine bedingt durch den Eisansatz veränderte aerodynamische Situation, anzupassen, und wobei
- als veränderter kollektiver Blattwinkel ein aerodynamisch verbesserter Blattwinkel gewählt und als Eisblattwinkel vorgegeben wird, wobei
- in der Blattwinkelanpassungsroutine der Eisblattwinkel durch einen Suchlauf gesucht wird, bei dem
- der kollektive Blattwinkel ausgehend von einem Anfangswinkel um einen Änderungswinkel verändert wird,
- eine Leistungsänderung als resultierende Änderung der Anlagenleistung erfasst wird, und
- der Eisblattwinkel in Abhängigkeit von dem Änderungswinkel und der Leistungsänderung gewählt wird, wobei
- der Eisblattwinkel als Summe aus dem Anfangswinkel und einem von der Leistungsänderung abhängigen Offsetwinkel berechnet wird.

2. Verfahren nach Anspruch 1, **dadurch gekennzeichnet, dass**
- der Eisblattwinkel als minimaler Blattwinkel vorgegeben wird, der je nach weiteren Anforderungen einer Betriebssteuerung der Windenergieanlage überschritten, aber nicht unterschritten werden soll.

3. Verfahren nach Anspruch 1 oder 2, **dadurch gekennzeichnet, dass**
- der Offsetwinkel proportional zu einem Quotienten aus Leistungsänderung und Änderungswinkel ist.

4. Verfahren nach einem der vorstehenden Ansprüche, **dadurch gekennzeichnet, dass**
- in einemdem Suchlauf der Blattwinkelanpassungsroutine zum Bestimmen des Eisblattwinkels
- der Offsetwinkel in Abhängigkeit von dem Änderungswinkel der Änderung des kollektiven Blattwinkels und der resultierenden Leistungsänderung gewählt wird, wobei
- der Offsetwinkel gebildet wird aus einem Produkt
- aus einem Verstärkungsfaktor und der Leistungsänderung oder
- aus dem Verstärkungsfaktor und einer relativen Leistungsänderung, wobei die relative Leistungsänderung als Quotient aus der Leistungsänderung und dem Änderungswinkel gebildet werden kann, und insbesondere
- der Verstärkungsfaktor in Abhängigkeit von einer an der Windenergieanlage vorherrschenden Windgeschwindigkeit gewählt wird, insbesondere so, dass
- der Verstärkungsfaktor um so größer gewählt wird, je kleiner die Windgeschwindigkeit ist.

5. Verfahren nach einem der vorstehenden Ansprüche, **dadurch gekennzeichnet, dass**
- in dem Suchlauf der Blattwinkelanpassungsroutine
- der kollektive Blattwinkel schrittweise, ausgehend von dem Anfangswinkel, um einen Änderungswinkel verändert wird, wobei
- der Änderungswinkel in Abhängigkeit von dem Anfangswinkel gewählt wird, insbesondere so, dass
- der Änderungswinkel dem Betrage nach um so größer gewählt wird, je kleiner der Anfangswinkel ist.

6. Verfahren nach einem der vorstehenden Ansprüche, **dadurch gekennzeichnet, dass**
- in der Blattwinkelanpassungsroutine **in**dem Suchlauf
- bei gleichzeitiger Beobachtung der Abgabeleistung, ausgehend von einem Anfangswinkel, der kollektive Blattwinkel
- in einem Erhöhungsschritt erhöht und anschließend wieder auf den Anfangswinkel verringert wird, und
- in einem Verringerungsschritt verringert und anschließend wieder auf den Anfangswinkel erhöht wird, wobei insbesondere
- in einem Erhöhungssuchlauf erst der Erhöhungsschritt und anschließend der Verringerungsschritt vorgesehen sind,
- in einem Verringerungssuchlauf erst der Verringerungsschritt und anschließend der Erhöhungsschritt vorgesehen sind und insbesondere
- der Erhöhungssuchlauf und der Verringerungssuchlauf abwechselnd ausgeführt und/oder in vorbestimmten Widerholungsintervallen wiederholt werden, oder
- nur der Erhöhungsschritt durchgeführt wird.

7. Verfahren nach einem der vorstehenden Ansprüche, **dadurch gekennzeichnet, dass**
- in dem Suchlauf der Blattwinkelanpassungsroutine eine Veränderung des kollektiven Blattwinkels in Abhängigkeit von vorgegebenen Mindestblattwinkeln erfolgt, insbesondere so, dass
- ein oder mehrere von der Betriebssteuerung vorgegebene Mindestblattwinkel erfasst werden, und ein Verringern des kollektiven Blattwinkels um den Änderungswinkel nur durchgeführt wird, wenn keiner der erfassten Mindestblattwinkel unterschritten wird, wobei ein bereits vorgegebener Eisblattwinkel nicht als erfasster Mindestblattwinkel berücksichtigt wird, insbesondere
- wird in dem Suchlauf dann jeweils nur ein Erhöhungsschritt durgeführt, in dem der kollektive Blattwinkel ausgehend von dem Anfangswinkel erhöht und anschließend wieder auf den Anfangswinkel verringert wird.

8. Verfahren nach einem der vorstehenden Ansprüche, **dadurch gekennzeichnet, dass**
- in der Blattwinkelanpassungsroutine
- der Suchlauf zum Finden des Eisblattwinkels in vorbestimmbaren Zeitintervallen wiederholt wird, wobei insbesondere vorgesehen ist, dass
- die vorbestimmbaren Zeitintervalle im Bereich von 30 bis 600 Sekunden, insbesondere im Bereich von 60 bis 120 Sekunden liegen, und/oder
- beim Wiederholen des Suchlaufs der zuvor bestimmte Eisblattwinkel als Anfangswinkel verwendet wird und/oder
- dass nach jedem Suchlauf der Offset-Winkel berechnet wird und der bisherige Eisblattwinkel um den Offset-Winkel verändert wird, und der Offset-Winkel jeweils auf einen maximalen Offset-Winkel begrenzt wird, wobei der maximale Offset-Winkel insbesondere im Bereich von 0,5° bis 2° liegt, insbesondere im Bereich von 0,75° bis 1,5°, insbesondere etwa 1° beträgt.

9. Verfahren nach einem der vorstehenden Ansprüche, **dadurch gekennzeichnet, dass**
- die Blattwinkelanpassungsroutine nur aktiviert wird, wenn
- ein Eisansatz erkannt wurde, und/oder
- eine Umgebungstemperatur der Windenergieanlage in einem Bereich liegt, in dem Eisansatz auftreten kann, insbesondere im Bereich unter +2°C , und insbesondere
- eine Erfassung der Umgebungstemperatur durchgeführt wird und die Blattwinkelanpassung in Abhängigkeit von der erfassten Umgebungstemperatur erfolgt und/oder
- die Blattwinkelanpassungsroutine nur aktiviert wird, wenn ein Eisansatz durch Vergleich mit einer Anlagenkennlinie erkannt wird.

10. Verfahren nach einem der vorstehenden Ansprüche, **dadurch gekennzeichnet, dass**
- die Blattwinkelanpassungsroutine und der Suchlauf nur ausgeführt wird, wenn wenigstens eine der folgenden Bedingungen erfüllt ist:
Bedingung 1: seit letztem Suchlauf ist wenigstens eine Mindestwartedauer verstrichen, die insbesondere im Bereich von 30 Sekunden bis 5 Minuten liegt,
Bedingung 2: die Windenergieanlage befindet sich in einem Automatikbetrieb, in dem automatische Veränderungen eines Betriebspunktes ermöglicht werden,
Bedingung 3: es wird ein Eisansatz durch Vergleich eines aktuellen Betriebspunktes mit einer Anlagenkennlinie erkannt, wenn dabei eine Mindestabweichung erreicht oder überschritten wird, oder
der Eisblattwinkel liegt über einem anderen Mindestblattwinkel,
Bedingung 4: eine vorherrschende Windgeschwindigkeit im Bereich der Windenergieanlage liegt oberhalb einer vorgebbaren Mindestwindgeschwindigkeit, insbesondere oberhalb von 2m/s, insbesondere oberhalb von 2,5m/s,
Bedingung 5: ein mittlerer kollektiver Blattwinkel liegt unterhalb eines vorgebbaren Mindestblattwinkelgrenzwertes, insbesondere unterhalb von 30°, insbesondere unterhalb von 20°,
Bedingung 6: ein Azimut-Suchlauf zum Suchen einer optimalen Azimutausrichtung der Windenergieanlage ist seit einer vorgebbaren Inaktivitätszeit inaktiv, insbesondere seit wenigstens 10 s, insbesondre seit wenigstens 20s,
Bedingung 7: die aktuelle Abgabeleistung hält ein vorgebbares Schwankungsmaß der Leistung ein, insbesondere weicht die Abgabeleistung für wenigstens 60s um nicht mehr als 15%, 10% oder insbesondere 5% von einem gleitenden Mittelwert der Abgabeleistung über 1 Minute ab, und
Bedingung 8: der aktuelle kollektive Blattwinkel hält ein vorgebbares Schwankungsmaß des Blattwinkels ein, insbesondere weicht der kollektive Blattwinkel um nicht mehr als 0,5° von einem gleitenden Mittelwert des kollektiven Blattwinkels der letzten 30 s ab.

11. Verfahren nach einem der vorstehenden Ansprüche, **dadurch gekennzeichnet, dass**
- auf einen Eisansatz durch Vergleich mit einer Anlagenkennlinie geprüft wird, bei dem ein Betriebspunkt, mit einer Anlagenkennlinie verglichen wird, wobei die Anlagenkennlinie
- einen Zusammenhang zwischen Anlagenleistung und Windgeschwindigkeit wiedergibt, und/oder
- einen Zusammenhang zwischen kollektivem Blattwinkel und Windgeschwindigkeit wiedergibt, und
- von einem Eisansatz ausgegangen wird, wenn zu einer erfassten Windgeschwindigkeit eine Mindestabweichung von der Anlagenkennlinie aufgetreten ist, bei der
- ein aktueller Betriebspunkt eine Anlagenleistung aufweist, die wenigstens um einen Leistungstoleranzbetrag von der Anlagenleistung der Anlagenkennlinie der erfassten Windgeschwindigkeit abweicht, oder
- der aktuelle Betriebspunkt einen kollektiven Blattwinkel aufweist, der wenigstens um einen Winkeltoleranzbetrag von dem kollektiven Blattwinkel der Anlagenkennlinie der erfassten Windgeschwindigkeit abweicht, wobei insbesondere
- erst von einem Eisansatz ausgegangen wird, wenn die Mindestabweichung von der Anlagenkennlinie wenigstens für eine vorbestimmt Mindestanzahl aufgetreten ist, wobei insbesondere vorgesehen ist, dass
- die Mindestanzahl im Bereich von 3 bis 10, liegt, insbesondere den Wert 5 aufweist.

12. Windenergieanlage, die
- einen aerodynamischen Rotor mit in ihrem Blattwinkel verstellbaren Rotorblättern aufweist,
- durch eine Betriebssteuerung gesteuert wird,
- zum Erzeugen einer Anlagenleistung vorbereitet ist, und dazu vorbereitet ist,
- ein Verfahren nach einem der vorstehenden Ansprüche auszuführen.

## Claims

1. Method for operating a wind power installation, wherein
- the wind power installation
- has an aerodynamic rotor having rotor blades of adjustable blade angle,
- is controlled by an operation control system, and
- is configured to generate an installation power, wherein
- a blade-angle adaptation routine is activated when an ice accretion situation occurs, when ice accretion on the rotor blades has been detected or is expected, wherein
- a collective blade angle of the rotor blades is modified by means of the blade-angle adaptation routine in order to adapt the rotor blades to an altered aerodynamic situation caused by the ice accretion, in order to increase the power, and wherein
- an aerodynamically improved blade angle is selected as a modified collective blade angle and specified as an iced-blade angle, wherein
- in the blade-angle adaptation routine, the iced-blade angle is sought by a search in which
- the collective blade angle is modified by a modification angle, starting from an initial angle,
- a change in power is detected as a resulting change in the installation power, and
- the iced-blade angle is selected in dependence on the modification angle and the change in power, wherein
- the iced-blade angle is calculated as the sum of the initial angle and an offset angle that is dependent on the change in power.

2. Method according to claim 1, **characterized in that**
- the iced-blade angle is specified as a minimum blade angle to be exceeded, but not undershot, depending on further requirements of an operation control system of the wind power installation.

3. Method according to claim 1 or 2, **characterized in that**
- the offset angle is proportional to a quotient of the change in power and the modification angle.

4. Method according to any one of the preceding claims, **characterized in that**
- in the search, performed by the blade-angle adaptation routine for determining the iced-blade angle
- the offset angle is selected in dependence on the modification angle of the modification, of the collective blade angle and the resulting change in power,
wherein
- the offset angle is formed from a product
- of a gain factor and the change in power, or
- from the product of the gain factor and a relative change in power, wherein the relative change in power may be formed as a quotient of the change in power and the modification angle, and in particular
- the gain factor is selected in dependence on a wind velocity prevailing at the wind power installation, in particular such that
- the lower the wind velocity, the greater is the gain factor selected.

5. Method according to any one of the preceding claims, **characterized in that**
- in the search, performed by the blade-angle adaptation routine,
- the collective blade angle is modified incrementally by a modification angle, starting from the initial angle, wherein
- the modification angle is selected in dependence on the initial angle, in particular such that
- the smaller the initial angle, the larger is the modification angle selected in terms of magnitude.

6. Method according to any one of the preceding claims, **characterized in that**
- in the search, in the blade-angle adaptation routine,
- with simultaneous monitoring of the output power, starting from an initial angle, the collective blade angle
- is increased in an increase step and then reduced back to the initial angle, and
- is reduced in a reduction step and then increased back to the initial angle, wherein in particular
- in an increase search, first the increase step and then the reduction step are provided,
- in a reduction search, first the reduction step and then the increase step are provided, and in particular
- the increase search and the reduction search are executed alternately and/or repeated at predetermined repetition intervals, or
- only the increase step is performed.

7. Method according to any one of the preceding claims, **characterized in that**
- in the search, performed by the blade-angle adaptation routine, a modification of the collective blade angle is effected in dependence on specified minimum blade angles, in particular such that
- one or more minimum blade angles specified by the operation control system is or are ascertained, and a reduction of the collective blade angle by the modification angle, is performed only if none of the ascertained minimum blade angles is undershot, wherein an already specified iced-blade angle is not considered as an ascertained minimum blade angle, in particular
- in the search only one increase step is performed at a time, in which the collective blade angle is increased starting from the initial angle, and then reduced back to the initial angle.

8. Method according to any one of the preceding claims, **characterized in that**
- in the blade-angle adaptation routine,
- the search, for finding the iced-blade angle is repeated at predeterminable time intervals, wherein it is provided in particular that
- the predetermined time intervals are in the range of from 30 to 600 seconds, in particular in the range of from 60 to 120 seconds, and/or
- the previously determined iced-blade angle is used as the initial angle in repetition of the search, and/or
- that after each search, the offset angle, is calculated and the previous iced-blade angle is modified by the offset angle, and the offset angle is limited to a maximum offset angle in each case, wherein the maximum offset angle is in particular in the range of from 0.5° to 2°, in particular in the range of from 0.75° to 1.5°, in particular approximately 1°.

9. Method according to any one of the preceding claims, **characterized in that**
- the blade-angle adaptation routine is activated only when
- ice accretion has been detected, and/or
- an ambient temperature of the wind power installation is in a range in which ice accretion may occur, in particular in the range of below +2°C, and in particular
- sensing of the ambient temperature is performed and the blade angle adaptation is effected in dependence on the sensed ambient temperature, and/or
- the blade-angle adaptation routine is activated only when ice accretion is detected by comparison with an installation characteristic curve.

10. Method according to any one of the preceding claims, **characterized in that**
- the blade-angle adaptation routine and the search, are executed only when at least one of the following conditions is fulfilled:
condition 1: at least a minimum wait time, which in particular is in the range of from 30 seconds to 5 minutes, has elapsed since the last search,
condition 2: the wind power installation is in an automatic mode in which automatic modifications of an operating point are enabled,
condition 3: ice accretion is detected by comparison of a current operating point with an installation characteristic curve, if a minimum deviation is reached or exceeded, or
if the iced-blade angle is above another minimum blade angle,
condition 4: a prevailing wind velocity in the region of the wind power installation is above a specifiable minimum wind velocity, in particular above 2 m/s, in particular above 2.5 m/s,
condition 5: a mean collective blade angle is below a specifiable minimum blade-angle limit value, in particular below 30°, in particular below 20°,
condition 6: an azimuth search, for searching an optimal azimuth orientation of the wind power installation, is inactive for a specifiable inactivity time, in particular for at least 10 seconds, in particular for at least 20 seconds,
condition 7: the current output power complies with a specifiable amount of power fluctuation, in particular for at least 60 seconds the output power does not differ by more than 15%, 10% or in particular 5% from a moving average value of the output power over 1 minute, and
condition 8: the current collective blade angle complies with a specifiable amount of fluctuation of the blade angle, in particular the collective blade angle does not differ by more than 0.5° from a moving average value of the collective blade angle of the last 30 seconds.

11. Method according to any one of the preceding claims, **characterized in that**
- checking for ice accretion is effected by comparison with an installation characteristic curve, in which an operating point is compared with an installation characteristic curve, wherein the installation characteristic curve
- represents a relationship between installation power and wind velocity, and/or
- represents a relationship between collective blade angle and wind velocity, and
- ice accretion is assumed if a minimum deviation from the installation characteristic curve has occurred at a sensed wind velocity, in which
- a current operating point has an installation power that deviates from the installation power of the installation characteristic curve of the sensed wind velocity by at least a power tolerance amount, or
- the current operating point has a collective blade angle that deviates from the collective blade angle of the installation characteristic curve of the sensed wind velocity by at least an angle tolerance amount, wherein, in particular
- ice accretion is assumed only when the minimum deviation from the installation characteristic curve has occurred at least for a predetermined minimum number of times, wherein, in particular, it is provided that
- the minimum number is in the range of from 3 to 10, in particular the value 5.

12. Wind power installation, which
- has an aerodynamic rotor having rotor blades of adjustable blade angle,
- is controlled by an operation control system,
- is configured to generate an installation power, and is configured
- to execute a method as claimed in any one of the preceding claims.

## Revendications

1. Procédé de fonctionnement d'une éolienne, dans lequel
- l'éolienne
- présente un rotor aérodynamique avec des pales de rotor à angle de pale réglable,
- est commandée par une commande de fonctionnement et
- est préparée à générer une puissance d'éolienne, dans lequel
- lorsqu'une situation de formation de givre se produit, si une formation de givre a été repérée sur les pales de rotor, ou est attendue, une routine d'ajustement d'angle de pale est activée, dans lequel
- avec la routine d'ajustement d'angle de pale, un angle de pale collectif des pales de rotor est modifié afin d'ajuster les pales de rotor à une situation aérodynamique modifiée par la formation de givre pour l'augmentation de puissance, et dans lequel
- un angle de pale aérodynamiquement amélioré est choisi comme angle de pale collectif modifié et prédéfini comme angle de pale en cas de givre, dans lequel
- dans la routine d'ajustement de l'angle de pale, l'angle de pale en cas de givre est recherché par une recherche au cours de laquelle
- l'angle de pale collectif est modifié d'un angle de variation à partir d'un angle initial,
- une variation de puissance est détectée comme variation résultante de la puissance de l'éolienne, et
- l'angle de pale en cas de givre est choisi en fonction de l'angle de variation et de la variation de puissance, dans lequel
- l'angle de pale en cas de givre est calculé comme la somme de l'angle initial et d'un angle de décalage dépendant de la variation de puissance.

2. Procédé selon la revendication 1, **caractérisé en ce que**
- l'angle de pale en cas de givre est prédéfini comme l'angle de pale minimal qui doit être dépassé, mais ne doit pas être inférieur, en fonction des autres exigences d'une commande de fonctionnement de l'éolienne.

3. Procédé selon la revendication 1 ou 2, **caractérisé en ce que**
- l'angle de décalage est proportionnel à un quotient de la variation de puissance et de l'angle de variation.

4. Procédé selon l'une quelconque des revendications précédentes, **caractérisé en ce que**
- dans la recherche de la routine d'ajustement d'angle de pale pour déterminer l'angle de pale en cas de givre
- l'angle de décalage est choisi en fonction de l'angle de variation de la variation de l'angle de pale collectif et de la variation de puissance résultante,
dans lequel
- l'angle de décalage est formé à partir d'un produit
- d'un facteur d'amplification et de la variation de puissance ou
- du facteur d'amplification et d'une variation de puissance relative, dans lequel la variation de puissance relative peut être formée en tant que quotient de la variation de puissance et de l'angle de variation, et en particulier
- le facteur d'amplification est choisi en fonction d'une vitesse du vent prédominante sur l'éolienne, en particulier de sorte que
- plus la vitesse du vent est faible, plus le facteur d'amplification est élevé.

5. Procédé selon l'une quelconque des revendications précédentes, **caractérisé en ce que**
- dans la recherche de la routine d'ajustement d'angle de pale,
- l'angle de pale collectif est progressivement modifié d'un angle de variation, à partir de l'angle initial,
- l'angle de variation est choisi en fonction de l'angle initial, en particulier de telle sorte que
- l'angle de variation est choisi pour être d'autant plus grand que l'angle initial est faible.

6. Procédé selon l'une quelconque des revendications précédentes, **caractérisé en ce que**
- dans la routine d'ajustement d'angle de pale au cours de la recherche
- en observant simultanément la puissance de sortie, à partir d'un angle initial, l'angle de pale collectif
- est augmenté dans une étape d'augmentation puis de nouveau réduit à l'angle initial, et
- est réduit dans une étape de réduction puis de nouveau augmenté à l'angle initial, dans lequel en particulier
- dans une recherche d'augmentation sont prévues tout d'abord l'étape d'augmentation puis l'étape de réduction,
- dans une recherche de réduction sont prévues tout d'abord l'étape de réduction puis l'étape d'augmentation et en particulier
- la recherche d'augmentation et la recherche de diminution sont exécutées alternativement et/ou répétées à des intervalles de répétition prédéterminés, ou
- seule l'étape d'augmentation est effectuée.

7. Procédé selon l'une quelconque des revendications précédentes, **caractérisé en ce que**
- dans la recherche de la routine d'ajustement d'angle de pale, une modification de l'angle de pale collectif a lieu en fonction d'angles de pale minimum prédéfinis, en particulier de telle sorte que
- un ou plusieurs angles de pale minimum prédéfinis par la commande de fonctionnement sont détectés, et une réduction de l'angle de pale collectif de l'angle de variation n'est effectuée que si aucun des angles de pale minimum détectés n'est franchi en descente, dans lequel un angle de pale en cas de givre déjà prédéfini n'est pas pris en compte comme angle de pale minimum détecté, en particulier
- respectivement une seule étape d'augmentation est alors effectuée dans la recherche, au cours de laquelle l'angle de pale collectif est augmenté à partir de l'angle initial puis de nouveau réduit à l'angle initial.

8. Procédé selon l'une quelconque des revendications précédentes, **caractérisé en ce que**
- dans la routine d'ajustement d'angle de pale
- la recherche de l'angle de pale en cas de givre est répétée à des intervalles de temps pouvant être prédéterminés, dans lequel il est prévu en particulier que
- les intervalles de temps pouvant être prédéterminés se situent dans la plage de 30 à 600 secondes, en particulier dans la plage de 60 à 120 secondes, et/ou
- lors de la répétition de la recherche, l'angle de pale en cas de givre déterminé précédemment soit utilisé comme angle initial et/ou
- qu'après chaque recherche l'angle de décalage soit calculé et que l'angle de pale en cas de givre précédent soit modifié de l'angle de décalage, et l'angle de décalage soit respectivement limité à un angle de décalage maximal, dans lequel l'angle de décalage maximal se situe en particulier dans la plage de 0,5° à 2°, en particulier dans la plage de 0,75° à 1,5°, en particulier est égal à environ 1°.

9. Procédé selon l'une quelconque des revendications précédentes, **caractérisé en ce que**
- la routine d'ajustement d'angle de pale n'est activée que si
- une formation de givre a été repérée, et/ou
- une température ambiante de l'éolienne se situe dans une plage dans laquelle une formation de givre peut se produire, en particulier dans la plage inférieure à +2 °C, et en particulier
- une détection de la température ambiante est effectuée et l'ajustement d'angle de pale a lieu en fonction de la température ambiante détectée et/ou
- la routine d'ajustement d'angle de pale n'est activée que si une formation de givre est repérée par comparaison avec une courbe caractéristique de l'éolienne.

10. Procédé selon l'une quelconque des revendications précédentes, **caractérisé en ce que**
- la routine d'ajustement d'angle de pale et la recherche ne sont exécutées que si au moins l'une des conditions suivantes est remplie :
condition 1: au moins un délai d'attente minimum, qui se situe en particulier dans la plage de 30 secondes à 5 minutes, doit s'être écoulé depuis la dernière recherche,
condition 2 : l'éolienne se trouve dans un mode automatique, dans lequel des modifications automatiques d'un point de fonctionnement sont permises.
condition 3 : une formation de givre est repérée par comparaison d'un point de fonctionnement actuel avec une courbe caractéristique de l'éolienne si un écart minimal est atteint ou dépassé, ou
l'angle de pale en cas de givre est supérieur à un autre angle de pale minimum,
condition 4 : une vitesse du vent prédominante dans la zone de l'éolienne est supérieure à une vitesse du vent minimale pouvant être prédéfinie, en particulier supérieure à 2 m/s, en particulier supérieure à 2,5 m/s,
condition 5 : un angle de pale collectif moyen est inférieur à une valeur limite d'angle de pale minimum pouvant être prédéfinie, en particulier inférieur à 30°, en particulier inférieur à 20°,
condition 6: une recherche d'azimut pour rechercher une orientation azimutale optimale de l'éolienne est inactive depuis un temps d'inactivité pouvant être prédéfini, en particulier depuis au moins 10 s, en particulier depuis au moins 20 s,
condition 7 : la puissance de sortie actuelle respecte une grandeur de fluctuation pouvant être prédéfinie de la puissance, en particulier la puissance de sortie ne s'écarte pas de plus de 15 %, 10 % ou en particulier 5 % d'une valeur moyenne flottante de la puissance de sortie sur 1 minute, pendant au moins 60 s, et
condition 8 : l'angle de pale collectif actuel respecte une grandeur de fluctuation pouvant être prédéfinie de l'angle de pale, en particulier l'angle de pale collectif ne s'écarte pas de plus de 0,5° d'une valeur moyenne flottante de l'angle de pale collectif des 30 dernières secondes.

11. Procédé selon l'une quelconque des revendications précédentes, **caractérisé en ce que**
- on vérifie une formation de givre par comparaison avec une courbe caractéristique d'éolienne, où un point de fonctionnement est comparé à une courbe caractéristique d'éolienne, dans lequel la courbe caractéristique d'éolienne
- représente une relation entre la puissance de l'éolienne et la vitesse du vent, et/ou
- représente une relation entre l'angle de pale collectif et la vitesse du vent, et
- on ne suppose une formation de givre que si un écart minimal par rapport à la courbe caractéristique de l'éolienne s'est produit à une vitesse du vent détectée, à laquelle
- un point de fonctionnement actuel présente une puissance d'éolienne qui diffère de la puissance d'éolienne de la courbe caractéristique de l'éolienne de la vitesse du vent détectée d'au moins un montant de tolérance de puissance, ou
- le point de fonctionnement actuel présente un angle de pale collectif qui diffère de l'angle de pale collectif de la courbe caractéristique de l'éolienne de la vitesse du vent détectée d'au moins un montant de tolérance angulaire, dans lequel en particulier,
- on ne suppose une formation de givre que si l'écart minimal par rapport à la courbe caractéristique de l'éolienne s'est produit au moins pour un nombre minimal prédéterminé, dans lequel il est en particulier prévu que
- le nombre minimal se situe dans la plage de 3 à 10, présente en particulier la valeur 5.

12. Éolienne, qui
- présente un rotor aérodynamique avec des pales de rotor à angle de pale réglable,
- est commandée par une commande de fonctionnement,
- est préparée à générer une puissance d'éolienne, et est préparée
- à mettre en œuvre un procédé selon l'une quelconque des revendications précédentes.
